# FASCICULE DE BREVET EUROPEEN

(11) **EP 3 446 436 B1**
(45) Date de publication et mention de la délivrance du brevet: **13.01.2021**
(21) Numéro de dépôt: 17722106.6
(22) Date de dépôt: 14.04.2017
(51) Int. Cl.: H04L 9/32, G06Q 20/04, G06Q 20/12, G06Q 20/20, G06Q 20/32, G06Q 20/38, G06Q 20/40

(54) **PROCÉDÉ D'OBTENTION PAR UN TERMINAL MOBILE D'UN JETON DE SÉCURITÉ**
VERFAHREN ZUR ERZEUGUNG EINES SICHERHEITSTOKEN DURCH EIN MOBILES ENDGERÄT
METHOD FOR OBTAINING A SECURITY TOKEN BY A MOBILE TERMINAL

(30) Priorité: 18.04.2016 FR 1653410
(43) Date de publication de la demande: 27.02.2019
(73) Titulaire: ORANGE, 75015 Paris (FR)
(72) Inventeur: FILIPIAK, Alicia, 75013 Paris (FR); GHAROUT, Saïd, 75012 Paris (FR); TRAORE, Jacques, 61100 Saint Georges Des Groseillers (FR); CORTIER, Véronique, 54506 Vandoeuvre Les Nancy (FR)
(74) Mandataire: Cabinet Beau de Loménie
(86) Numéro de dépôt international: PCT/FR2017/050910
(87) Numéro de publication internationale: WO 2017/182747

(56) Documents cités:
- WO-A1-2013/151797
- GB-A- 2 525 426
- US-A1- 2015 172 283
- US-A1- 2015 312 038
- US-B1- 9 262 771
- ANTUNES DIOGO ET AL: "NFC4Sure: Mobile ticketing system", 2016 SECOND INTERNATIONAL CONFERENCE ON MOBILE AND SECURE SERVICES (MOBISECSERV), IEEE, 26 février 2016 (2016-02-26), pages 1-5, XP032886165, DOI: 10.1109/MOBISECSERV.2016.7440229 ISBN: 978-1-4673-9684-4 [extrait le 2016-03-23]
- URIEN PASCAL: "Towards token-requestor for epayment based on cloud of secure elements and HCE mobiles", 2015 FIRST CONFERENCE ON MOBILE AND SECURE SERVICES (MOBISECSERV), IEEE, 20 février 2015 (2015-02-20), pages 1-2, XP032755118, DOI: 10.1109/MOBISECSERV.2015.7072876
- "Payment Tokenisation Specification Technical Framework", , 31 mars 2014 (2014-03-31), XP055193899, Extrait de l'Internet: URL:https://www.emvco.com/specifications.a spx?id=263 [extrait le 2015-06-05] cité dans la demande

## Description

### Arrière-plan de l'invention

L'invention se rapporte au domaine général de la sécurisation de transactions électroniques sur un réseau de télécommunications.

Elle concerne plus particulièrement la génération et l'utilisation de jetons de sécurité, aussi couramment désignés par « tokens », afin d'assurer la sécurité de transactions électroniques opérées sur un réseau de télécommunications. Par transaction électronique, on entend ici tout type d'échanges entre deux ou plusieurs dispositifs via un réseau de télécommunications (ledit réseau de télécommunications pouvant être constitués d'un ou de plusieurs sous-réseaux). Une telle transaction électronique peut être notamment un achat réalisé sur Internet auprès d'un site marchand comprenant une opération de paiement électronique, un virement d'argent, l'accès à un contenu, etc. On s'intéresse ici à des transactions électroniques dans lesquelles l'une des parties à la transaction est un terminal mobile d'un utilisateur.

L'invention a donc une application privilégiée mais non limitative dans le contexte de transactions électroniques de paiement auprès d'un site ou d'un dispositif marchand par l'intermédiaire d'un terminal mobile.

Contrairement au paiement de proximité, où le porteur d'une carte bancaire insère sa carte dans un terminal de paiement, le paiement de transactions électroniques sur Internet ou via un terminal mobile présente un certain nombre de dangers : les données échangées lors de ce paiement sont en effet plus facilement accessibles et interceptables, et dès lors, sont davantage susceptibles d'être utilisées de manière frauduleuse par des personnes mal intentionnées.

La génération et l'utilisation de jetons, ou « tokenisation », apporte une solution à ce problème en proposant de substituer certaines données sensibles (comme par exemple des données bancaires telles qu'un numéro de carte bancaire ou de compte bancaire), échangées lors des transactions électroniques, par des jetons de sécurité ou tokens générés à cet effet par une entité de confiance appelée fournisseur de jetons ou « Token Service Provider » en anglais. Ce fournisseur de jetons est chargé de générer des jetons de sécurité temporaires et « neutres », dans le sens indépendants des données sensibles qu'ils remplacent, pouvant être utilisés lors des transactions électroniques, et de stocker par ailleurs le lien entre ces jetons et les données sensibles des utilisateurs nécessaires à l'exécution des transactions.

Le standard de paiement par carte bancaire EMV®, défini par le consortium EMVCo regroupant notamment les sociétés EuroCard, MasterCard, Visa et American Express, spécifie dans le document intitulé « EMV® Payment Tokenisation Spécification », version 1.0, mars 2014, un cadre technique général pour mettre en œuvre la tokenisation dans le cadre d'un paiement électronique par carte bancaire.

Les applications de paiement par terminal mobile proposées aujourd'hui s'appuient toutes sur le standard EMV®, adapté à un contexte mobile. Ces applications sont pour la plupart propriétaires et implémentent de bout en bout le protocole EMV® sur un élément sécurisé du terminal mobile. Par « élément sécurisé » ou « Secure Element » en anglais, on entend ici un élément inviolable au sens du standard GLobalPlatform, c'est-à-dire résistant aux attaques («ou « tamper-resistant » en anglais), et qui est apte à héberger de façon sécurisée des applications et/ou à stocker des données confidentielles et sensibles telles que des données cryptographiques ou autres clés de chiffrement privées et/ou secrètes. Un tel élément sécurisé est par exemple une carte mémoire sécurisée SD (Secure Digital) ou secure microSD, une carte UICC (de l'anglais « Universal Integrated Circuit Card »), telle que par exemple une carte SIM (Subscriber Identity Module), etc.

L'implémentation du protocole EMV® de bout en bout sur un élément sécurisé du terminal mobile tel que sa carte UICC ne prend pas en compte l'environnement dans lequel évolue l'élément sécurisé. En effet, contrairement à la puce d'une carte bancaire qui est incluse sur un support passif, l'élément sécurisé d'un terminal mobile évolue dans un environnement plus vulnérable connecté de façon quasi-continue et permanente à un réseau de télécommunications.

En outre, la tendance actuelle au niveau des terminaux mobiles est d'ouvrir l'accès à l'élément sécurisé depuis le système d'exploitation du terminal mobile, ce qui augmente les possibilités d'attaques par un agent malveillant (ex. via un malware ou un virus installé sur le système d'exploitation du terminal mobile).

Or exécuter dans un tel environnement un protocole initialement pensé pour un environnement moins vulnérable aux attaques tel qu'un environnement passif n'est pas sans conséquence pour la sécurité des transactions électroniques. En outre, il convient de noter que le consortium EMVCo ne définit qu'un cadre technique de mise en œuvre de ce protocole EMV® sans imposer les détails de son implémentation.

La publication de Antunes Diogo: "NFC4Sure: Mobile Ticketing System" décrit une manière de transporter des jetons d'un fournisseur de jetons aux terminaux mobiles.

### Objet et résumé de l'invention

L'invention permet de pallier notamment aux inconvénients de l'état de la technique en proposant un mécanisme fiable et sûr permettant de provisionner des jetons de sécurité destinés à être utilisés par un terminal mobile lors de transactions électroniques sur un réseau de télécommunications, en substitution de données sensibles relatives à cet utilisateur (ex. données bancaires). Ce mécanisme s'appuie sur un lien de confiance établi entre un élément sécurisé du terminal mobile, considéré comme inviolable, et un dispositif fournisseur de jetons, lui-même considéré comme entité de confiance. Il comprend différentes opérations réalisées au sein du terminal mobile, dont certaines sont implémentées par l'élément sécurisé même du terminal mobile et protégées par une identification de l'utilisateur de ce terminal, ainsi que sur des opérations réalisées au niveau du dispositif fournisseur de jetons.

Plus particulièrement, l'invention vise un procédé d'obtention, par un terminal mobile d'un utilisateur, d'au moins un jeton de sécurité destiné à être utilisé lors d'une transaction électronique, ce procédé comprenant :
- une étape d'identification de l'utilisateur du terminal mobile ;
- une étape, déclenchée si l'identification de l'utilisateur est réalisée avec succès, de génération par un élément sécurisé du terminal mobile d'au moins une valeur d'identification du terminal mobile en utilisant une première clé secrète partagée entre l'élément sécurisé et un dispositif fournisseur de jetons ;
- une étape d'envoi, au dispositif fournisseur de jetons, d'une requête d'obtention d'au moins un jeton de sécurité destiné à être utilisé par le terminal mobile lors d'une transaction électronique, cette requête comprenant ladite au moins une valeur d'identification du terminal mobile ;
- une étape de réception, en provenance du dispositif fournisseur de jetons, dudit au moins un jeton de sécurité sous forme chiffrée, chaque jeton de sécurité étant associé à un aléa généré par le dispositif fournisseur de jetons et chiffré au moyen d'une clé de chiffrement générée pour ce jeton de sécurité à partir de l'aléa et d'une deuxième clé secrète partagée entre le dispositif fournisseur de jetons et l'élément sécurisé du terminal mobile.

On note qu'à l'exception de l'étape de génération, les différentes étapes précitées peuvent être mises en œuvre par une application du terminal mobile et/ou par un environnement d'exécution de confiance (ou « Trusted Execution Environment ») qui ne sont pas nécessairement inclus dans l'élément sécurisé. Ainsi par exemple, l'étape d'envoi de la requête d'obtention de jetons de sécurité, l'étape de réception des jetons peuvent être implémentées par une application mobile hébergée par le terminal mobile tandis qu'un environnement d'exécution de confiance, préférentiellement isolé du système d'exploitation du terminal mobile, peut gérer de manière sécurisée l'identification de l'utilisateur du terminal. Cette identification peut être mise en œuvre via différents moyens et interfaces, comme par exemple via la saisie d'un code PIN (Personal Identification Number) par l'utilisateur, ou la capture d'une empreinte digitale de l'utilisateur via un capteur équipant le terminal mobile, ou encore la saisie d'un identifiant et d'un mot de passe, etc.

Corrélativement, l'invention vise aussi un terminal mobile comprenant :
- un élément sécurisé ;
- un module d'identification configuré pour identifier un utilisateur du terminal mobile ;
- un module de génération, compris dans l'élément sécurisé et activé si l'identification de l'utilisateur par le module d'identification est réalisée avec succès, ce module de génération étant configuré pour générer au moins une valeur d'identification du terminal mobile en utilisant une première clé secrète partagée entre l'élément sécurisé et un dispositif fournisseur de jetons ;
- un module d'envoi, configuré pour envoyer au dispositif fournisseur de jetons une requête d'obtention d'au moins un jeton de sécurité destiné à être utilisé par le terminal mobile lors d'une transaction électronique, cette requête comprenant ladite au moins une valeur d'identification du terminal mobile ; et
- un module de réception, apte à recevoir en provenance du dispositif fournisseur de jetons, ledit au moins un jeton de sécurité sous forme chiffrée, chaque jeton de sécurité étant associé à un aléa généré par le dispositif fournisseur de jetons et chiffré au moyen d'une clé de chiffrement générée pour ce jeton à partir de l'aléa et d'une deuxième clé secrète partagée entre le dispositif fournisseur de jetons et l'élément sécurisé du terminal mobile.

On note que l'exécution du procédé d'obtention selon l'invention n'est pas nécessairement corrélée à une transaction électronique en cours d'exécution. Il peut être mis en œuvre préalablement, avant même que le terminal mobile ne participe à une telle transaction. Le procédé selon l'invention permet en effet au terminal mobile d'obtenir en préalable de toute transaction électronique, un voire plusieurs jetons de sécurité qu'il pourra utiliser ultérieurement en fonction de ses besoins. L'invention permet ainsi un gain de temps lors de l'exécution des transactions électroniques.

Préférentiellement chaque jeton de sécurité n'est utilisable qu'au cours d'une unique transaction électronique. Ceci permet de limiter les conséquences négatives résultant de l'interception d'un tel jeton par une entité malveillante.

De façon avantageuse, les jetons de sécurité obtenus par le terminal mobile sont chiffrés par le dispositif fournisseur de jetons avant leur transmission au terminal mobile, puis stockés sous cette forme chiffrée sur ce dernier. Dans un mode privilégié de réalisation, lors de l'étape de stockage, ledit au moins un jeton de sécurité chiffré et l'aléa associé sont stockés en dehors de l'élément sécurisé du terminal mobile, par exemple à même le système d'exploitation du terminal mobile. Ceci simplifie l'accès par le terminal mobile aux jetons de sécurité obtenus et permet d'économiser les ressources de l'élément sécurisé. Par ailleurs, cela facilite l'implémentation du procédé. La protection des jetons de sécurité est néanmoins garantie au niveau du terminal mobile grâce à un chiffrement de ces derniers au moyen d'une clé de chiffrement propre à chaque jeton et générée par le dispositif fournisseur de jetons à partir d'un secret partagé uniquement avec l'élément sécurisé du terminal mobile (deuxième clé secrète au sens de l'invention). Autrement dit, seul l'élément sécurisé du terminal mobile, qui est considéré comme inviolable, est capable de régénérer les clés de chiffrement ayant servi au chiffrement des jetons de sécurité et permettant leur déchiffrement en vue de leur utilisation. L'invention offre ainsi une garantie de sécurité forte et formelle.

L'obtention des jetons de sécurité par le terminal mobile est en outre avantageusement conditionnée par l'identification de l'utilisateur du terminal. Ce n'est qu'à cette condition, conformément à l'invention, que l'élément sécurisé du terminal mobile est activé pour générer une ou plusieurs valeurs d'identification du terminal lui permettant d'obtenir des jetons de sécurité auprès du dispositif fournisseur de jetons. Ces valeurs d'identification font en effet partie intégrante de la requête envoyée par le terminal mobile au dispositif fournisseur de jetons pour obtenir les jetons de sécurité. Elles permettent de garantir au dispositif fournisseur de jetons que l'utilisateur du terminal a bien été identifié avant l'envoi de cette requête.

Ainsi, l'obtention des jetons de sécurité par le terminal mobile n'étant déclenchée que suite à une identification valide de l'utilisateur du terminal mobile, on s'assure que quand bien même une entité malveillante parviendrait à obtenir et à déchiffrer les jetons de sécurité générés pour le terminal mobile, l'utilisation frauduleuse en découlant sera limitée à ces jetons : autrement dit, le nombre de transactions électroniques auxquelles l'entité malveillante pourra participer n'ira pas au-delà du nombre de jetons disponibles sur le terminal mobile.

Dans un mode particulier de réalisation, ladite au moins une valeur d'identification générée par l'élément sécurisé comprend :
- un compteur maintenu par l'élément sécurisé, ce compteur correspondant au nombre de requêtes d'obtention d'au moins un jeton envoyées par le terminal au dispositif fournisseur de jetons ; et
- un condensé généré en appliquant une fonction de hachage au compteur et à la première clé secrète.

La première clé secrète étant partagée seulement entre le dispositif fournisseur de jetons et l'élément sécurisé du terminal mobile, il est aisé pour le dispositif fournisseur de jetons de s'assurer, à partir des valeurs d'identification qu'il reçoit dans la requête, que la requête a bien été émise par un terminal mobile autorisé avec lequel il partage un secret. On établit ainsi un lien de confiance entre le terminal mobile et le dispositif fournisseur de jetons.

En outre, l'insertion d'un compteur parmi ces valeurs d'identification permet aisément, via un contrôle approprié mis en place au niveau du dispositif fournisseur de jetons, de limiter une utilisation frauduleuse de ces valeurs d'identification si une entité malveillante les intercepte. En effet, un compteur équivalent peut être mis en place au niveau du dispositif fournisseur de jetons permettant à celui-ci de contrôler que la valeur de compteur qu'il reçoit dans la requête est cohérent avec la valeur de compteur qu'il maintient pour le terminal mobile. En l'absence de cohérence, le dispositif fournisseur de jetons peut rejeter la requête du terminal mobile.

Dans un mode particulier de réalisation, le procédé d'obtention comprend en outre, avant l'étape d'envoi, une étape de chiffrement de la requête en utilisant une clé publique attribuée au dispositif fournisseur de jetons.

Ceci permet de sécuriser davantage les communications entre le terminal mobile et le dispositif fournisseur de jetons, et de se prémunir contre une attaque visant à intercepter les valeurs d'identification du terminal mobile envoyées dans la requête. En effet, grâce au chiffrement asymétrique mis en œuvre par le terminal mobile, on s'assure que seul le dispositif fournisseur de jetons est en mesure d'accéder aux valeurs d'identification du terminal mobile.

En variante, un canal de communication sécurisé entre le terminal mobile et le dispositif fournisseur de jetons peut être établi par tout autre moyen.

Comme mentionné précédemment, l'invention s'appuie également sur un dispositif fournisseur de jetons de sécurité sollicité par le terminal mobile après identification de son utilisateur et sur le procédé de génération de jetons de sécurité mis en œuvre par ce dispositif.

Ainsi l'invention vise également, selon un autre aspect, un procédé de génération, par un dispositif fournisseur de jetons, d'au moins un jeton destiné à être utilisé par un terminal mobile lors d'une transaction électronique, ledit procédé de génération comprenant :
- une étape de réception, en provenance du terminal mobile, d'une requête d'obtention d'au moins un jeton de sécurité destiné à être utilisé par le terminal mobile lors d'une transaction électronique, cette requête comprenant au moins une valeur d'identification du terminal mobile générée par un élément sécurisé du terminal mobile en utilisant une première clé secrète partagée entre l'élément sécurisé et le fournisseur de jetons ;
- une étape de vérification de ladite au moins une valeur d'identification au moyen de la première clé secrète ;
- une étape, déclenchée si ladite au moins une valeur d'identification est valide, de génération pour ledit terminal mobile dudit au moins un jeton de sécurité et d'un aléa associé à chaque jeton ;
- une étape de génération d'une clé de chiffrement pour chaque jeton de sécurité à partir de l'aléa associé à ce jeton et d'une deuxième clé secrète partagée entre le dispositif fournisseur de jetons et l'élément sécurisé du terminal mobile ;
- une étape de chiffrement de chaque jeton de sécurité en utilisant la clé de chiffrement générée pour ce jeton ; et
- une étape d'envoi au terminal mobile dudit au moins un jeton de sécurité chiffré et de l'aléa associé.

Corrélativement, l'invention vise aussi un dispositif fournisseur de jetons de sécurité destinés à être utilisés lors de transactions électroniques, comprenant :
- un module de réception, apte à recevoir en provenance d'un terminal mobile, une requête d'obtention d'au moins un jeton de sécurité destiné à être utilisé par le terminal mobile lors d'une transaction électronique, cette requête comprenant au moins une valeur d'identification du terminal mobile générée par un élément sécurisé du terminal mobile en utilisant une première clé secrète partagée entre l'élément sécurisé et le dispositif fournisseur de jetons ;
- un premier module de vérification configuré pour vérifier ladite au moins une valeur d'identification au moyen de la première clé secrète ;
- un premier module de génération, activé si ladite au moins une valeur d'identification vérifiée par le module de vérification est valide, et configuré pour générer pour le terminal mobile au moins un jeton de sécurité et un aléa associé à chaque jeton ;
- un second module de génération, configuré pour générer une clé de chiffrement pour chaque jeton de sécurité généré par le premier module de génération, à partir de l'aléa associé à ce jeton et d'une deuxième clé secrète partagée entre le dispositif fournisseur de jetons et l'élément sécurisé du terminal mobile ;
- un module de chiffrement, configuré pour chiffrer chaque jeton de sécurité en utilisant la clé de chiffrement générée pour ce jeton ; et
- un module d'envoi, configuré pour envoyer au terminal mobile ledit au moins un jeton de sécurité chiffré et l'aléa associé.

Le procédé de génération et le dispositif fournisseur de jetons bénéficient des mêmes avantages que ceux cités précédemment pour le procédé d'obtention et le terminal mobile.

Les différentes étapes mises en œuvre permettent en effet de s'assurer que les jetons de sécurité obtenus par le terminal mobile sont bien générés par une entité de confiance, à savoir par le dispositif fournisseur de jetons avec lequel l'élément sécurisé du terminal mobile partage diverses clés secrètes. En outre, ces étapes sont réalisées après identification de l'utilisateur et vérification que le terminal mobile est bien un terminal autorisé à requérir de tels jetons de sécurité auprès du fournisseur de jetons, via la vérification des valeurs d'identification fournies par celui-ci dans sa requête.

Les jetons de sécurité sont par ailleurs chiffrés par le dispositif fournisseur de jetons avant leur transmission au terminal mobile de sorte à être stockés sous forme chiffrée sur ce dernier. Ce chiffrement s'appuie sur un secret partagé entre le dispositif fournisseur de jetons et l'élément sécurisé du terminal mobile seulement. Le déchiffrement des jetons de sécurité n'est donc possible que moyennant la connaissance de ce secret entre l'élément sécurisé du terminal mobile et le dispositif fournisseur de jetons, et l'accès à l'élément sécurisé du terminal mobile n'est permis que via l'identification de l'utilisateur du terminal mobile.

Dans un mode particulier de réalisation par exemple, pour chaque jeton de sécurité, la clé de chiffrement est générée en appliquant une fonction de hachage sur l'aléa associé à ce jeton et la deuxième clé secrète partagée entre l'élément sécurisé du terminal mobile et le dispositif fournisseur de jetons.

L'invention, telle qu'elle est mise en œuvre au niveau du terminal mobile et au niveau du dispositif fournisseur de jetons, offre par conséquent un protocole de tokenisation particulièrement bien adapté à l'environnement mobile. Ce protocole permet de limiter les conséquences d'un vol de données stockées sur le terminal mobile ou du terminal mobile lui-même, ainsi que les conséquences d'une interception malveillante des communications entre le terminal mobile et le dispositif fournisseur de jetons.

Dans un mode particulier de réalisation de l'invention, ledit au moins un jeton de sécurité chiffré et l'aléa associé sont signés avant leur envoi au terminal mobile en utilisant une clé de chiffrement privée attribuée au dispositif fournisseur de jetons.

De cette sorte, il n'est pas possible à une entité malveillante de se substituer au dispositif fournisseur de jetons et de fournir des jetons de sécurité au terminal mobile. Le terminal mobile en vérifiant la signature accompagnant les jetons de sécurités qui lui sont transmis peut en effet s'assurer que ceux-ci émanent bien du dispositif fournisseur de jetons.

Dans un mode particulier de réalisation, chaque jeton généré pour le terminal mobile est inclus avant son chiffrement dans un paquet de données comprenant en outre un identifiant du terminal mobile et des données propres à l'utilisateur du terminal mobile (ex. données bancaires), ce paquet de données étant signé au moyen d'une clé de chiffrement privée attribuée au dispositif fournisseur de jetons. Par exemple, le paquet de données peut être conforme au standard EMV®.

L'invention offre ainsi un protocole de tokenisation parfaitement compatible avec le standard EMV® et transparent pour les dispositifs marchands utilisant ce protocole.

L'invention vise la génération et l'obtention de jetons de sécurité (autrement dit la tokenisation), mais également l'utilisation à proprement parler de ces jetons de sécurité lors de transactions électroniques.

Ainsi, selon un autre aspect, l'invention concerne également un procédé de traitement d'une requête relative à une transaction électronique par un terminal mobile d'un utilisateur comprenant un élément sécurisé, le procédé de traitement comprenant :
- une étape, déclenchée sur réception d'une requête prédéterminée provenant d'un dispositif tiers et relative à une transaction électronique, d'identification de l'utilisateur du terminal mobile ;
- une étape, déclenchée si l'identification de l'utilisateur est réalisée avec succès, de sélection d'un jeton de sécurité parmi au moins un jeton de sécurité chiffré stocké sur le terminal mobile et obtenu d'un dispositif fournisseur de jetons conformément à un procédé d'obtention selon l'invention, le jeton sélectionné étant associé à un aléa ;
- une étape de génération par l'élément sécurisé du terminal mobile, pour le jeton sélectionné, d'une clé de chiffrement à partir de l'aléa associé au jeton et de la deuxième clé secrète partagée entre le dispositif fournisseur de jetons et l'élément sécurisé et utilisée lors du procédé d'obtention ;
- une étape de déchiffrement du jeton sélectionné au moyen de la clé de chiffrement générée ; et
- une étape d'envoi d'une réponse à la requête du dispositif tiers comprenant le jeton déchiffré.

Corrélativement, selon cet aspect de l'invention, le module d'identification du terminal mobile est activé en outre sur réception d'une requête prédéterminée provenant d'un dispositif tiers et relative à une transaction électronique, et le terminal mobile comprend en outre :
- un module de sélection, activé si l'identification de l'utilisateur par le module d'identification est réalisée avec succès, et configuré pour sélectionner un jeton de sécurité parmi ledit au moins un jeton de sécurité chiffré stocké sur le terminal mobile;
- un module de génération, compris dans l'élément sécurisé du terminal mobile, et configuré pour générer pour le jeton de sécurité sélectionné, une clé de chiffrement à partir de l'aléa associé au jeton et de la deuxième clé secrète partagée entre le dispositif fournisseur de jetons et l'élément sécurisé ;
- un module de déchiffrement configuré pour déchiffrer le jeton de sécurité sélectionné au moyen de la clé de chiffrement générée ; et
- un module d'envoi configuré pour envoyer une réponse à la requête du dispositif tiers comprenant le jeton de sécurité déchiffré.

Le déchiffrement du jeton de sécurité n'est pas nécessairement mis en œuvre par l'élément sécurisé, afin notamment de ne pas surcharger celui-ci. L'opération de déchiffrement peut être mise en œuvre notamment par une application mobile hébergée par le terminal mobile.

On note comme mentionné précédemment que l'utilisation d'un jeton de sécurité est décorrélée de son obtention. En outre, l'utilisation d'un jeton au cours d'une transaction électronique est protégée, comme son obtention, par l'identification de l'utilisateur du terminal. L'exécution de la transaction électronique qui dépend de la fourniture du jeton de sécurité par le terminal mobile est donc conditionnée par l'identification de l'utilisateur du terminal, ce qui permet de s'assurer que c'est bien l'utilisateur du terminal mobile, et donc un utilisateur autorisé, qui est à l'origine de cette transaction.

Dans un mode particulier de réalisation, lors de l'étape de génération, l'élément sécurisé du terminal mobile génère en outre un élément de signature de la transaction électronique à partir d'un identifiant du dispositif tiers, d'une donnée caractéristique de la transaction fournie par le dispositif tiers (ex. montant de la transaction), de l'aléa associé au jeton de sécurité et de la deuxième clé secrète, cet élément de signature de la transaction étant transmis au dispositif tiers dans la réponse à la requête.

L'exploitation de cet élément de signature, notamment par le dispositif tiers et par le dispositif fournisseur de jetons, permet de renforcer la sécurité de la transaction électronique. En outre, il permet de limiter l'utilisation du jeton de sécurité à une unique transaction électronique caractérisée par les informations comprises dans l'élément de signature. On limite par ce biais les conséquences négatives pouvant découler de l'interception par une entité malveillante d'un jeton de sécurité généré pour le terminal mobile.

Dans un mode particulier de réalisation, le procédé de traitement comprend en outre une étape de mise hors service sur le terminal mobile du jeton de sécurité envoyé dans la réponse à la requête, cette étape étant déclenchée par la réception par le terminal mobile d'une confirmation de l'utilisation du jeton de sécurité par le dispositif tiers.

Le jeton de sécurité est ainsi utilisable une unique fois, c'est-à-dire pour une unique transaction électronique.

Selon un autre aspect encore, l'invention vise un procédé de vérification d'un jeton de sécurité fourni par un terminal mobile d'un utilisateur à un dispositif tiers lors d'une transaction électronique, ce procédé de validation étant destiné à être mis en œuvre par un dispositif fournisseur de jetons ayant généré le jeton pour le terminal mobile conformément à un procédé de génération selon l'invention, le procédé de vérification comprenant :
- une étape de réception, en provenance du dispositif tiers, d'une requête de vérification comprenant le jeton ; et
- une étape de vérification que le jeton compris dans la requête a bien été généré par le dispositif fournisseur de jetons pour le terminal mobile.

Corrélativement, selon cet aspect, le dispositif fournisseur de jetons selon l'invention comprend :
- un second module de réception apte à recevoir, en provenance d'un dispositif tiers, une requête de vérification comprenant un jeton de sécurité fourni par le terminal mobile de l'utilisateur lors d'une transaction électronique, et
- un second module de vérification configuré pour vérifier que le jeton de sécurité compris dans la requête a bien été généré pour le terminal mobile par le dispositif fournisseur de jetons.

Dans un mode particulier de réalisation, le procédé de vérification comprend en outre une étape de validation d'un élément de signature de la transaction compris dans la requête, cet élément de signature ayant été généré à partir d'un identifiant du dispositif marchand, d'une donnée caractéristique de la transaction, de l'aléa associé au jeton de sécurité et de la deuxième clé secrète utilisée lors du procédé de génération et partagée entre l'élément sécurisé du terminal mobile et le dispositif de fournisseur de jetons.

Le procédé de vérification et le dispositif fournisseur de jetons selon cet aspect de l'invention bénéficient des mêmes avantages que ceux cités précédemment pour le procédé de traitement et le terminal mobile.

On note par ailleurs que le traitement réalisé conformément à l'invention par le terminal mobile de la requête émanant du dispositif tiers et la vérification opérée par le dispositif fournisseur de jetons sont compatibles avec le standard EMV®, de sorte que l'invention peut être aisément appliquée lors de transactions électroniques comportant un paiement électronique via le terminal mobile.

Dans un mode particulier de réalisation, les différentes étapes du procédé d'obtention, du procédé de génération, du procédé de traitement et/ou du procédé de vérification sont déterminées par des instructions de programmes d'ordinateurs.

En conséquence, l'invention vise aussi un programme d'ordinateur sur un support d'informations, ce programme étant susceptible d'être mis en œuvre dans un terminal mobile ou plus généralement dans un ordinateur, ce programme comportant des instructions adaptées à la mise en œuvre des étapes d'un procédé d'obtention et/ou d'un procédé de traitement tel que décrit ci-dessus.

L'invention vise également un programme d'ordinateur sur un support d'informations, ce programme étant susceptible d'être mis en œuvre dans un dispositif fournisseur de jetons (ou TSP) ou plus généralement dans un ordinateur, ce programme comportant des instructions adaptées à la mise en œuvre des étapes d'un procédé de génération et/ou d'un procédé de vérification tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système comprenant :
- un dispositif fournisseur de jetons de sécurité selon l'invention ;
- un terminal mobile selon l'invention ; et
- un dispositif tiers apte à réaliser une transaction électronique avec le terminal mobile ; le terminal mobile étant configuré pour utiliser lors de ladite transaction électronique avec le dispositif tiers un jeton de sécurité généré par le dispositif fournisseur de jetons.

Comme mentionné précédemment, la transaction électronique peut comprendre notamment une opération de paiement et le jeton de sécurité est utilisé par le terminal mobile lors de cette opération de paiement.

On peut également envisager, dans d'autres modes de réalisation, que le procédé d'obtention, le procédé de traitement, le procédé de génération, le procédé de vérification, le terminal mobile, le dispositif fournisseur de jetons et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système conforme à l'invention ;
- les figures 2 et 3 illustre l'architecture matérielle d'un terminal mobile et d'un dispositif fournisseur de jetons du système de la figure 1, dans un mode particulier de réalisation ;
- la figure 4 illustre les principales étapes d'un procédé d'obtention conforme à l'invention, tel qu'il est mis en œuvre par le terminal mobile de la figure 2 ;
- la figure 5 illustre les principales étapes d'un procédé de génération conforme à l'invention, tel qu'il est mis en œuvre par le dispositif fournisseur de jeton de la figure 3 dans un mode particulier de réalisation ;
- la figure 6 illustre les principales étapes d'un procédé de vérification conforme à l'invention, tel qu'il est mis en œuvre par le dispositif fournisseur de jeton de la figure 3, dans un mode particulier de réalisation ; et
- la figure 7 illustre les principales étapes d'un procédé de traitement conforme à l'invention, tel qu'il est mis en œuvre par le terminal mobile de la figure 2, dans un mode particulier de réalisation.

### Description détaillée de l'invention

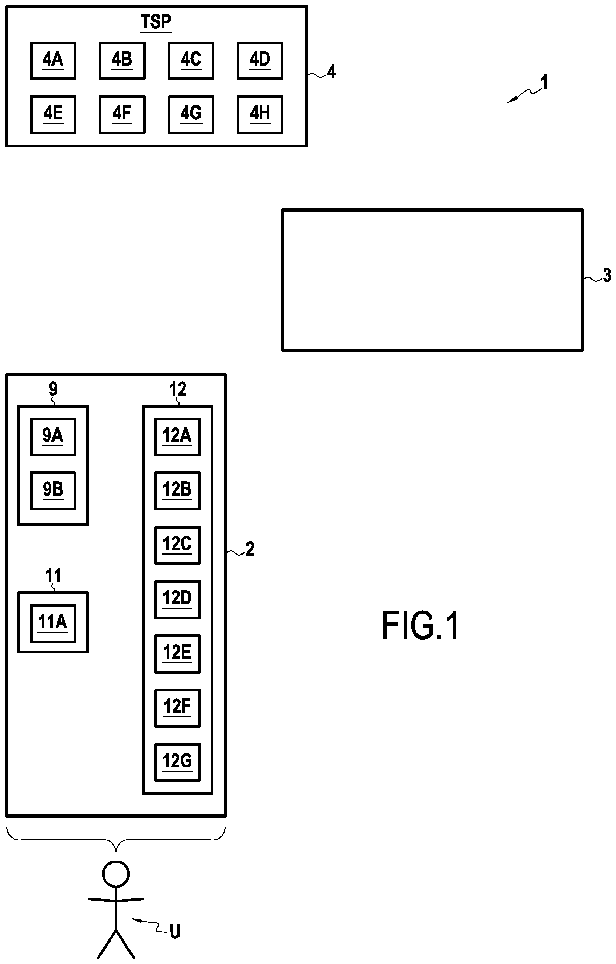

La **figure 1** représente, dans son environnement et dans un mode particulier de réalisation, un système 1 conforme à l'invention permettant d'encadrer des transactions électroniques dans un réseau de télécommunications, tel que par exemple le réseau public Internet.

Aucune limitation n'est attachée à la nature ni à la composition du réseau de télécommunications considéré, ce dernier pouvant être constitué notamment de plusieurs sous-réseaux.

Dans l'exemple illustré à la figure 1, on envisage une transaction électronique de type achat d'un article par un utilisateur U d'un terminal mobile 2 conforme à l'invention, cet article étant proposé à la vente sur un site web hébergé par un dispositif marchand 3 (dispositif tiers au sens de l'invention). La transaction électronique comprend une opération de paiement de l'article acheté par l'utilisateur U réalisée via le terminal mobile 2 auprès du dispositif marchand 3.

On suppose ici que le réseau de paiement sous-jacent permettant cette opération de paiement est conforme aux spécifications du standard EMV®. Ce réseau de paiement met en œuvre notamment pour la gestion de telles transactions électroniques un processus de génération et d'utilisation de jetons, ou « tokenisation », conforme à l'invention et compatible avec le cadre technique imposé par le standard EMV® dans le document (ci-après D1) intitulé « EMV® Payment Tokenisation Spécification », version 1.0, mars 2014 édité par le consortium EMVCo. Un tel jeton se substitue à une donnée sensible pérenne, telle qu'un numéro de compte bancaire ou un numéro de carte de paiement, dans le cadre de transactions de paiement électroniques. Le processus de tokenisation s'appuie à cet effet sur le terminal mobile 2 et sur le dispositif marchand 3 du système 1, ainsi que sur un dispositif 4 fournisseur de jetons de sécurité (ou TSP pour Token Service Provider) conforme à l'invention. Le dispositif TSP 4 appartient au système 1 et est apte à fournir au terminal mobile 2 des jetons de sécurité (ou tokens) que celui-ci peut utiliser lors de ses transactions électroniques, et notamment dans l'exemple envisagé ici lors de l'opération de paiement de l'article acheté auprès du dispositif marchand 3.

Le réseau de paiement comprend également d'autres entités non représentées sur la figure 1, telles que par exemple un organisme bancaire gérant le compte de l'utilisateur U.

Il convient de noter que ces hypothèses ne sont pas limitatives en soi et que l'invention s'applique à d'autres types de transactions électroniques (ex. transfert d'argent, etc.).

Par ailleurs, aucune limitation n'est attachée à la nature du réseau de télécommunications mobiles auquel est connecté le terminal mobile 2 pour communiquer avec le dispositif marchand 3 et avec le dispositif TSP 4. Il peut s'agir par exemple d'un réseau 3G, 4G, etc.

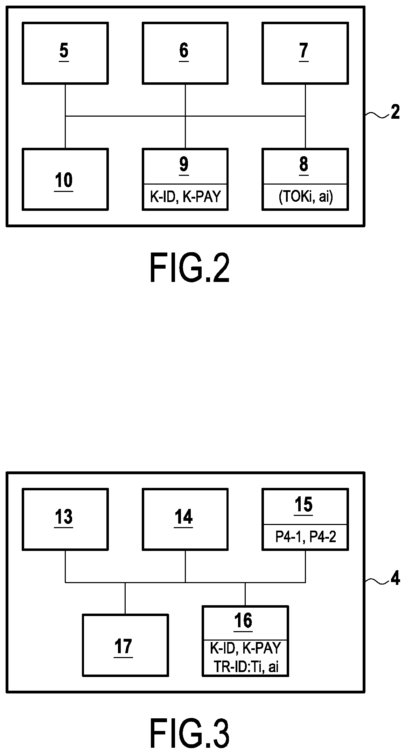

Dans le mode de réalisation décrit ici, le terminal mobile 2 a l'architecture matérielle d'un ordinateur telle que représentée schématiquement sur la **figure 2****.**

Il comprend notamment un processeur 5, une mémoire vive 6, une mémoire morte 7, une mémoire non volatile 8, un élément sécurisé 9, muni d'un micro-processeur et de mémoires (ex. mémoires morte et vive), et un module de communication 10 permettant au terminal mobile 2 de communiquer avec le dispositif marchand 3 et avec le dispositif TSP 4. Le module de communication 10 comprend ainsi notamment des antennes d'émission et de réception et permet au terminal mobile 2 de communiquer sur un réseau de télécommunications mobile, en utilisant diverses données et applications stockées sur l'élément sécurisé 9. L'élément sécurisé 9 est par exemple ici une carte UICC.

En variante, il peut s'agir de tout autre élément sécurisé tel que défini par le standard GlobalPlatform, c'est-à-dire réputé inviolable et résistant aux attaques (« tamper-resistant » en anglais). Un tel élément sécurisé peut être par exemple une carte sécurisée SD ou secure microSD, etc.

La mémoire morte 7 du terminal mobile 2 et la mémoire de l'élément sécurisé 9 constituent des supports d'enregistrement conformes à l'invention, lisibles respectivement par le processeur 5 et par le microprocesseur de l'élément sécurisé 9 et sur lequel sont enregistrés les instructions d'un programme d'ordinateur P2-1 conforme à l'invention comportant des instructions pour l'exécution des étapes d'un procédé d'obtention selon l'invention, et un programme d'ordinateur P2-2 conforme à l'invention, comportant des instructions pour l'exécution des étapes d'un procédé de traitement selon l'invention. Le programme d'ordinateur P2-2 peut être configuré pour appeler le programme P2-1.

Ces programmes d'ordinateur définissent de façon équivalente des modules fonctionnels et logiciels ici du terminal 2, configurés pour mettre en œuvre les étapes du procédé d'obtention et du procédé de traitement selon l'invention. Ces modules fonctionnels s'appuient ou commandent les éléments matériels 5-10 du terminal mobile 2. Ils sont, dans le mode de réalisation décrit ici, répartis sur trois entités illustrées à la figure 1, à savoir sur l'élément sécurisé 9, sur un environnement d'exécution sécurisé 11, aussi appelé « Trusted Execution Environment » en anglais, et sur une application mobile 12. L'environnement d'exécution sécurisé 11 offre à l'utilisateur U une interface sécurisée lui permettant de s'identifier via différents moyens (ex. saisie d'un code PIN ou saisie d'un identifiant et d'un mot de passe de l'utilisateur via un clavier numérique virtuel prévu par l'interface, capture d'une empreinte tactile ou digitale via un capteur approprié prévu sur le terminal mobile 2, etc.).

Dans le mode de réalisation décrit ici, l'environnement d'exécution sécurisé 11 est conforme à la définition donnée par le standard GlobalPlatform. Il s'agit d'une zone sécurisée du processeur 5 du terminal mobile 2 complètement isolée du système d'exploitation du terminal mobile 2 où s'exécutent les applications mobiles installées sur le terminal et qui offre un environnement d'exécution et de stockage sécurisé.

Les différents modules fonctionnels définis par les programmes d'ordinateur P2-1 et P2-2 comprennent ici notamment, comme illustré à la figure 1 :
- un module d'identification 11A, localisé dans l'environnement d'exécution sécurisé 11, et configuré pour identifier l'utilisateur U du terminal mobile 2 sur requête de l'application mobile 12;
- un premier module de génération 9A, compris dans l'élément sécurisé 9 et activé si l'identification de l'utilisateur par le module d'identification 11A est réalisée avec succès, ce module de génération étant configuré pour générer au moins une valeur d'identification du terminal mobile en utilisant une clé secrète K-ID (première clé secrète au sens de l'invention) partagée entre l'élément sécurisé 9 et le dispositif TSP 4 ;
- un premier module d'envoi 12A prévu dans l'application mobile 12 et configuré pour envoyer au dispositif TSP 4 une requête d'obtention d'un nombre N de jetons de sécurité pouvant être utilisés par le terminal mobile lors de transactions électroniques, N désignant un entier supérieur ou égal à 1. La requête ainsi envoyée comprend la ou les valeurs d'identification du terminal mobile 2 générée(s) par le module de génération 9A ;
- un premier module de réception 12B prévu dans l'application mobile 12, apte à recevoir en provenance du dispositif TSP 4, le ou les jetons de sécurité sous forme chiffrée ainsi que des aléas associés à ces jetons de sécurité ;
- un module de stockage 12C prévu dans l'application mobile 12 et configuré pour stocker sur le terminal mobile 2, par exemple dans sa mémoire non volatile 8 le ou les jetons de sécurité chiffrés reçus du dispositif TSP 4 ainsi que leurs aléas ;
- un deuxième module de réception 12D prévu dans l'application mobile 12 et apte à recevoir en provenance d'un dispositif marchand tel que le dispositif marchand 3 une requête relative à une transaction électronique, comme par exemple une requête de paiement ;
- un module de sélection 12E, prévu dans l'application mobile 12 et configuré pour sélectionner suite à la réception d'une telle requête, un jeton de sécurité parmi les jetons chiffrés stockés dans la mémoire non volatile 8 afin d'utiliser ce jeton pour la transaction électronique associée à cette requête ;
- un second module de génération 9B, compris dans l'élément sécurisé 9 du terminal mobile 2, et configuré pour générer pour le jeton de sécurité sélectionné par le module de sélection 12E, une clé de chiffrement à partir de l'aléa associé au jeton et d'une clé secrète K-PAY (deuxième clé secrète au sens de l'invention) partagée entre le dispositif TSP4 et l'élément sécurisé 9 ;
- un module de déchiffrement 12F configuré dans l'application mobile 12 pour déchiffrer le jeton de sécurité sélectionné au moyen de la clé de chiffrement générée pour ce jeton par le second module de génération 9B ; et
- un deuxième module d'envoi 12G configuré pour envoyer une réponse à la requête du dispositif marchand comprenant le jeton de sécurité déchiffré.

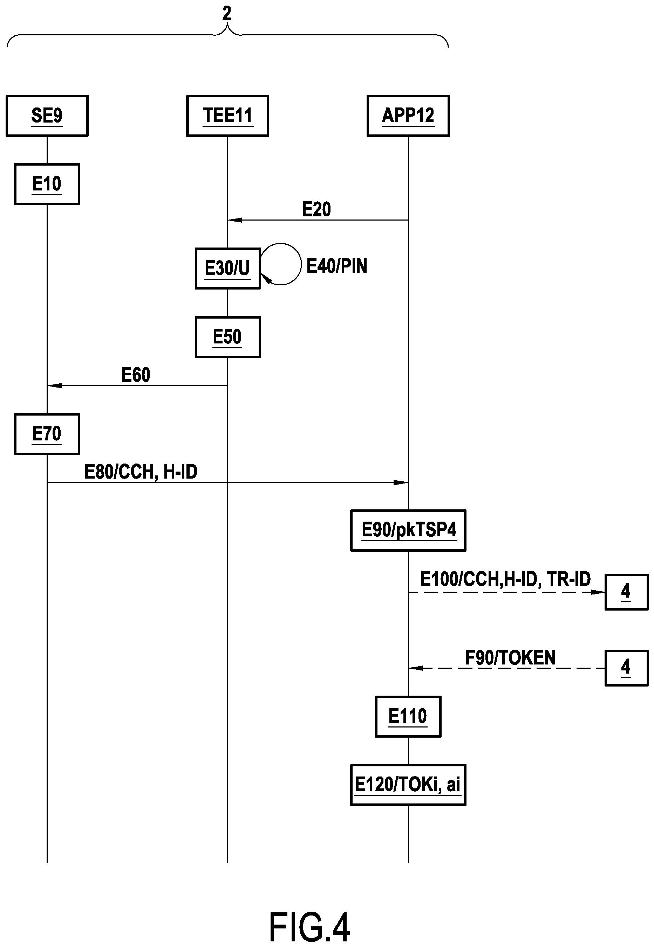

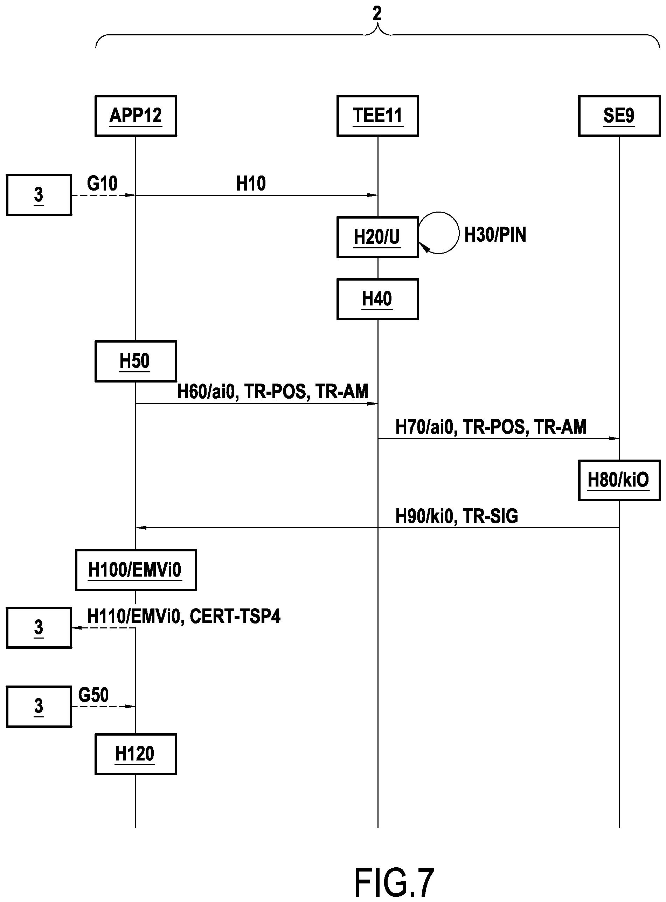

On note que les modules 11A, 9A, et 12A-12C sont activés lors du provisionnement des jetons de sécurité pour le terminal mobile 2. Les modules 11A, 12D-12G et 9B sont activés lors de la transaction électronique. Les fonctions de ces divers modules sont décrites plus en détail ultérieurement en référence à la figure 4 illustrant les principales étapes d'un procédé d'obtention de jetons de sécurité selon l'invention et à la figure 7 illustrant les principales étapes d'un procédé de traitement d'une requête relative à une transaction électronique selon l'invention.

De façon similaire, dans le mode de réalisation décrit ici, le dispositif TSP 4 a l'architecture matérielle d'un ordinateur telle que représentée schématiquement sur la **figure 3****.**

Il comprend notamment un processeur 13, une mémoire vive 14, une mémoire morte 15, une mémoire non volatile 16, et un module de communication 17 permettant au dispositif TSP 4 de communiquer notamment avec le terminal mobile 2 et le dispositif marchand 3.

La mémoire morte 15 du dispositif TSP 4 constitue un support d'enregistrement conforme à l'invention, lisible par le processeur 13 du dispositif 4 et sur lequel sont enregistrés des programmes d'ordinateur P4-1 et P4-2 conformes à l'invention, comportant respectivement des instructions pour l'exécution des étapes d'un procédé de génération de jetons de sécurité selon l'invention, et des instructions pour l'exécution des étapes d'un procédé de vérification d'un jeton de sécurité selon l'invention.

Ces programmes d'ordinateur définissent de façon équivalente des modules fonctionnels et logiciels ici du dispositif 4, configurés pour mettre en œuvre les étapes du procédé de génération et du procédé de vérification selon l'invention. Ces modules fonctionnels s'appuient ou commandent les éléments matériels 13-17 du dispositif TSP 4. Ils comprennent ici notamment, comme illustré à la figure 1 :
- un premier module de réception 4A, apte à recevoir en provenance du terminal mobile 2, une requête d'obtention d'un nombre N de jetons de sécurité pouvant être utilisés par le terminal mobile lors de transactions électroniques, cette requête comprenant au moins une valeur d'identification du terminal ;
- un premier module de vérification 4B configuré pour vérifier la validité de la ou des valeurs d'identification comprises dans la requête au moyen de la clé secrète K-ID ;
- un premier module de génération 4C, activé si les valeurs d'identification contenues dans la requête sont valides, et configuré pour générer et stocker pour le terminal mobile 2 les N jetons de sécurité requis et un aléa associé à chaque jeton ;
- un second module de génération 4D, configuré pour générer une clé de chiffrement pour chaque jeton de sécurité généré par le premier module de génération 4B, à partir de l'aléa associé à ce jeton et de la clé secrète K-PAY ;
- un module de chiffrement 4E, configuré pour chiffrer chaque jeton de sécurité en utilisant la clé de chiffrement générée pour ce jeton ;
- un module d'envoi 4F, configuré pour envoyer au terminal mobile 2 les N jetons de sécurité chiffrés et leurs aléas associés ;
- un deuxième module de réception 4G apte à recevoir, en provenance d'un dispositif marchand tel que le dispositif 3, une requête de vérification comprenant un jeton de sécurité fourni par le terminal mobile 2 de l'utilisateur lors d'une transaction électronique ; et
- un second module de vérification 4H configuré pour vérifier que le jeton de sécurité compris dans la requête a bien été généré pour le terminal mobile 2 par le dispositif TSP 4.

On note que le dispositif TSP 4 peut comprendre d'autres modules, non décrits en détail ici, permettant de « détokeniser » le jeton de sécurité reçu, c'est-à-dire obtenir une donnée sensible associée au jeton et nécessaire à l'exécution de la transaction, d'interagir avec un organisme de compensation de transaction, tel qu'un organisme bancaire auquel est relié l'utilisateur U, etc., ces modules étant connus en soi et conformes à la mise en œuvre du protocole EMV®.

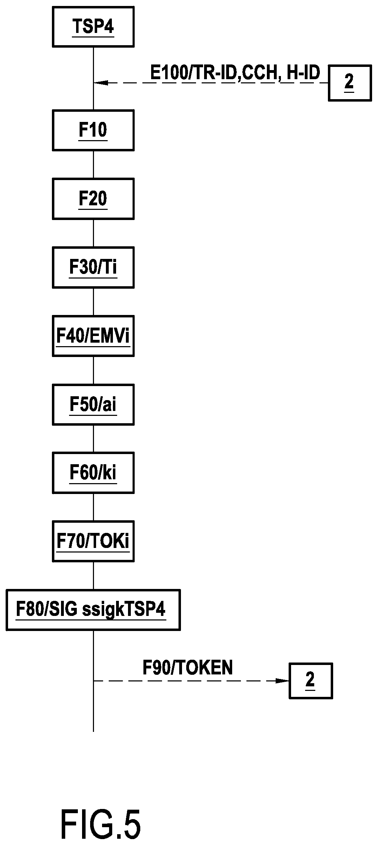

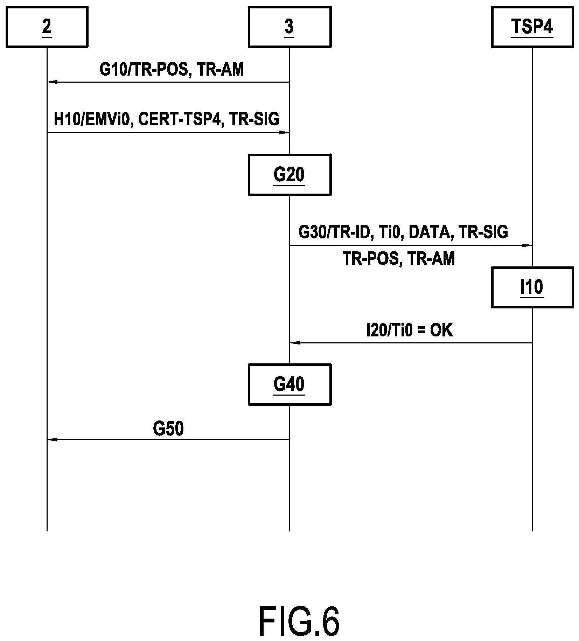

Par ailleurs, on note que les modules 4A-4F sont activés lors du provisionnement des jetons de sécurité pour le terminal mobile 2. Les modules 4A, 4G et 4H sont activés lors de la transaction électronique. Les fonctions de ces divers modules sont décrites plus en détail ultérieurement en référence à la figure 5 illustrant les principales étapes d'un procédé de génération de jetons de sécurité selon l'invention et à la figure 6 illustrant les principales étapes d'un procédé de vérification d'un jeton de sécurité selon l'invention.

Comme mentionné précédemment, l'invention permet avantageusement de décorréler la génération des jetons de sécurité destinés à être utilisés par le terminal mobile 2 pour des transactions électroniques de l'utilisation à proprement parler de ces jetons de sécurité.

Ainsi, nous allons dans un premier temps décrire en référence **aux** **figures 4** **et** **5****,** les principales étapes mises en œuvre pour la génération des jetons de sécurité (tokenisation). La figure 4 illustre les principales étapes d'un procédé d'obtention de jetons de sécurité telles qu'elles sont mises en œuvre dans un mode particulier de réalisation au sein du terminal mobile 2 par des différentes entités 9, 11 et 12. La figure 5 illustre les principales étapes d'un procédé de génération de jetons de sécurité telles qu'elles sont mises en œuvre dans un mode particulier de réalisation par le dispositif TSP 4.

On suppose en préalable de la tokenisation que l'utilisateur U s'est enregistré auprès du dispositif fournisseur de jetons 4, ou TSP 4, lors d'une phase préliminaire d'inscription. Lors de cette phase d'inscription, l'utilisateur U a communiqué notamment au dispositif TSP 4 ses données sensibles qu'il souhaite que le dispositif TSP 4 remplace par des jetons de sécurité (numéro de compte ou de carte bancaire dans l'exemple de transaction électronique envisagé ici) et a reçu du dispositif TSP 4 un identifiant de l'utilisateur noté TR-ID. Les données sensibles fournies par l'utilisateur U sont stockées par exemple dans la mémoire non volatile 16 du dispositif TSP 4 en association avec l'identifiant TR-ID.

Par ailleurs, c'est lors de cette phase d'inscription qu'a lieu le partage des clés secrètes K-ID et K-PAY entre l'élément sécurisé 9 du terminal 2 et le dispositif TSP 4. Les clés secrètes K-ID et K-PAY sont stockées au niveau du terminal mobile 2 dans l'élément sécurisé 9 (étape E10), et sont ainsi rendues inaccessibles, notamment à toute application extérieure à l'élément sécurisé 9. Elles sont stockées au niveau du dispositif TSP 4 en association avec l'identifiant TR-ID par exemple dans sa mémoire non volatile 16.

Le dispositif TSP 4 communique également lors de cet échange au terminal mobile 2 des clés publiques de chiffrement et de (vérification de) signature (respectivement pkTSP4 et psigkTSP4) correspondant à des clés privées de (dé)chiffrement et de signature (respectivement skTSP4 et ssigkTSP4) utilisées par le dispositif TSP 4 lors de la génération des jetons de sécurité, comme détaillé davantage ultérieurement. Ces clés sont stockées par exemple dans la mémoire non volatile du terminal 2. Dans la demande, par souci de simplification, on utilise le terme « clés de chiffrement », respectivement « clés de signature », pour désigner indifféremment les clés permettant le chiffrement et/ou le déchiffrement de données, respectivement les clés permettant la signature ou la vérification d'une signature. L'homme du métier distinguera sans difficulté à quelle fonction (chiffrement ou déchiffrement, signature ou vérification de signature) est désignée la clé de chiffrement ou de signature considérée.

Suite à cette inscription, le terminal 2 requiert auprès du dispositif TSP 4 des jetons de sécurité destinés à être utilisés lors de ses transactions électroniques en substitution ici des données bancaires de l'utilisateur U.

Conformément à l'invention, avant d'envoyer sa requête au dispositif TSP, le terminal 2, par l'intermédiaire de l'application mobile 12, requiert une identification de l'utilisateur U du terminal 2. A cet effet, l'application mobile 12 envoie une requête d'identification à l'environnement d'exécution sécurisé 11 ou TEE 11 dans la suite de la description (étape E20).

Sur réception de cette requête, le TEE 11, par l'intermédiaire de son module d'identification 11A, demande à l'utilisateur U de s'identifier (étape E30). Dans le mode de réalisation décrit ici, le module d'identification 11A du TEE 11 demande à l'utilisateur U de lui fournir à cet effet un code PIN. Toutefois, comme mentionné précédemment, d'autres modes d'identification de l'utilisateur U peuvent être considérés en variante.

On suppose que l'utilisateur U fournit le code PIN requis (étape E40). Le module d'identification 11A du TEE 11 vérifie la validité du code PIN (étape E50).

Si le code PIN fourni par l'utilisateur U n'est pas correct (éventuellement après plusieurs tentatives), le TEE 11 notifie l'application mobile 12 de l'échec de l'identification de l'utilisateur U. Le procédé d'obtention s'achève alors.

Si l'identification de l'utilisateur U est réalisée avec succès, le TEE 11 déclenche la génération par l'élément sécurisé 9 de valeurs d'identification du terminal mobile 2 (étape E60). Plus particulièrement, le TEE 11 envoie une requête à l'élément sécurisé 9 lui demandant de générer une ou plusieurs valeurs d'identification du terminal 2.

Dans le mode de réalisation décrit ici, sur réception de cette requête, l'élément sécurisé 9, par l'intermédiaire de son premier module de génération 9A, génère deux valeurs d'identification en utilisant la clé secrète K-ID partagée avec le dispositif TSP 4 (étape E70).

A cette fin, il incrémente dans un premier temps un compteur noté CCH reflétant ici le nombre de requêtes émises par le terminal mobile 2 pour obtenir des jetons de sécurité. Ce compteur joue en quelque sorte le rôle d'un numéro de session d'obtention de jetons par le terminal mobile 2.

Puis il génère un condensé noté H-ID (ou « hash » en anglais) en appliquant une fonction de hachage cryptographique à clé secrète HMAC (pour keyed-Hash Message Authentication Code) sur le compteur CCH et la clé secrète K-ID. Aucune limitation n'est attachée à la fonction de hachage utilisée par l'élément de sécurité 9 pour générer le condensé H-ID. Il peut s'agir par exemple d'une fonction SHA-2, SHA-3, etc. De manière générale pour mettre en œuvre l'invention, on choisit préférentiellement des fonctions de hachage cryptographiques, des tailles de clés, des algorithmes de chiffrement et de signature conformes aux référentiels de sécurité en vigueur tels que les recommandations de référence de l'ANSSI (Agence Nationale de la Sécurité des Systèmes d'Information) ou NIST (National Institute of Standards and Technology).

Le compteur CCH et le condensé H-ID sont ici deux valeurs d'identification du terminal mobile 2 au sens de l'invention. Elles sont transmises par l'élément sécurisé 9 à l'application mobile 12 (étape E80). On note qu'avantageusement, ces valeurs d'identification ne sont calculées par l'élément sécurisé 9 qu'après identification de l'utilisateur U, et utilisent la clé secrète K-ID partagée entre l'élément sécurisé 9 et le dispositif TSP 4. En d'autres mots, ces valeurs d'identification assurent d'une part que l'utilisateur U du terminal 2 s'est identifié avec succès auprès du terminal et d'autre part, qu'elles ont bien été générées par un terminal 2 autorisé et enregistré auprès du dispositif TSP 4. Le condensé H-ID est ainsi lié à l'utilisateur et à la demande de jetons.

Bien entendu, l'invention ne se limite pas à ces deux valeurs d'identification, et d'autres valeurs d'identification remplissant les mêmes fonctions peuvent être envisagées en variante.

L'application mobile 12 envoie alors, par l'intermédiaire de son module d'envoi 12A, une requête de génération de jetons au dispositif TSP 4 (étape E100). Cette requête vise à obtenir ici un nombre N de jetons de sécurité, N désignant un entier supérieur ou égal à 1.

Dans le mode de réalisation décrit ici, la requête envoyée au dispositif TSP 4 est chiffrée par l'application mobile 12 (étape E90). Plus particulièrement, l'application mobile 12 chiffre au moyen d'un algorithme de chiffrement asymétrique, par exemple de type El Gamal, en utilisant la clé publique de chiffrement pkTSP4 du dispositif TSP 4 communiquée lors de la phase d'inscription, les différentes données destinées à être transmises dans la requête de génération de jetons adressée au dispositif TSP 4. Dans l'exemple considéré ici, ces données comprennent l'identifiant TR-ID de l'utilisateur U auprès du dispositif TSP 4, et les deux valeurs d'identification CCH et H-ID générées par l'élément sécurisé 9. Ainsi un attaquant qui intercepterait les communications entre le terminal mobile 2 et le TSP 4 ne pourrait pas analyser et utiliser la requête et les informations qu'elle contient.

Les valeurs d'identification et l'identifiant ainsi chiffrés sont inclus dans la requête de génération de jetons qui est ensuite envoyée par le module d'envoi 12A de l'application mobile 12 au dispositif TSP 4 (étape E100).

En référence à la figure 5, sur réception de la requête de génération de jetons du terminal mobile 2 visant à obtenir N jetons de sécurité, le dispositif TSP 4 extrait de la requête les valeurs d'identification et l'identifiant ainsi chiffrés, et déchiffre ces données au moyen d'un algorithme de déchiffrement correspondant à l'algorithme de chiffrement asymétrique utilisé par l'application mobile 12 lors de l'étape E90 (étape F10). Il utilise à cet effet sa clé privée de (dé)chiffrement skTSP4 correspondant à la clé publique pkTSP4 utilisée par l'application mobile 12, et qu'il est le seul à détenir.

Dans le mode de réalisation décrit ici, le dispositif TSP 4 maintient, pour chaque utilisateur enregistré auprès de lui, un compteur CTSP(TR-ID) qui comptabilise le nombre de requêtes de génération de jetons reçues de l'utilisateur U. Ce compteur est incrémenté à chaque requête de génération de jetons reçue du terminal 2. Le dispositif TSP 4, par l'intermédiaire de son module de vérification 4B, compare ce compteur CTSP(TR-ID) avec le compteur CCH transmis dans la requête de génération de jetons et détermine si les deux compteurs sont cohérents (étape F20). Par cohérents on entend ici égaux à une valeur limite près correspondant à une marge de désynchronisation des compteurs autorisée (par exemple pour prendre en compte l'existence de problèmes potentiels affectant le réseau).

Le module de vérification 4B vérifie par ailleurs également la validité de la valeur du condensé H-ID. A cet effet, il applique la même fonction de hachage cryptographique à clé secrète HMAC que l'élément sécurisé 9 sur la valeur de compteur CCH et la clé secrète K-ID qu'il partage avec l'élément sécurisé 9. Si la valeur de condensé ainsi obtenu correspond à la valeur H-ID et les compteurs CCH et CTSP(TR-ID) sont cohérents, alors le module de vérification 4B détermine que les valeurs d'identification du terminal 2 sont valides. Cela garantit l'intégrité de la requête émise par le terminal mobile.

Dans le cas contraire, le dispositif TSP 4 rejette la requête de génération de jetons du terminal mobile 2 et met fin au procédé de génération des jetons de sécurité.

La validité des valeurs d'identification du terminal 2 déclenche la génération par le dispositif TSP 4 des N jetons de sécurité requis par le terminal 2.

Plus particulièrement, dans le mode de réalisation décrit ici, le premier module de génération 4C du dispositif TSP 4 génère N jetons de sécurité Ti, i=1,...,N, selon les principes connus préconisés par le standard EMV® et rappelés notamment dans le document D1 cité précédemment (étape F30). Dans l'exemple envisagé ici, chaque jeton de sécurité est destiné à se substituer à un numéro de carte bancaire de l'utilisateur aussi appelé PAN (pour Primary Account Number), associé à un compte bancaire de l'utilisateur et utilisé par celui-ci pour le paiement électronique.

Puis, dans le mode de réalisation décrit ici, le module de génération 4C du dispositif TSP 4 forme pour chaque jeton Ti généré, i=1,..N, un paquet de données EMVi incluant le jeton Ti ainsi que l'identifiant du terminal 2 TR-ID auprès du dispositif TSP 4, et des données bancaires transactionnelles DATA propres à l'utilisateur U (i.e. données transactionnelles requises par la banque pour valider un paiement à l'exclusion du PAN remplacé par le jeton, ces données transactionnelles incluant notamment le nom de l'utilisateur, la date de péremption de son moyen de paiement et le cas échéant un cryptogramme de sécurité le protégeant, etc.) et fournies par celui-ci avec son numéro de carte PAN lors de la phase préliminaire d'inscription auprès du dispositif TSP 4. Le paquet de données EMVi est conforme aux paquets de données définis pour le paiement bancaire par le standard EMV® et décrit notamment dans la norme ISO 8583.

Le module de génération 4C signe alors le paquet de données EMVi ainsi obtenu au moyen d'un algorithme de signature prédéterminé (par exemple un algorithme RSA (Rivest Shamir Adleman) connu en soi) et en utilisant la clé privée de signature ssigkTSP4 du dispositif TSP 4.

Pour chaque jeton Ti généré, i=1,...,N, le module de génération 4C génère également un aléa noté ai, i=1,..,N (étape F50). Il stocke chaque jeton Ti et son aléa associé ai dans la mémoire non volatile 16 du dispositif TSP 4 en association avec l'identifiant TR-ID de l'utilisateur U.

Puis le second module de génération 4D du dispositif TSP 4 calcule à partir de cet aléa ai et de la clé secrète K-PAY partagée avec l'élément sécurisé 9 une clé de chiffrement ki pour le jeton Ti (étape F60). Dans le mode de réalisation décrit ici, la clé de chiffrement ki est obtenue en appliquant une fonction de hachage cryptographique à clé secrète HMAC sur l'aléa ai et la clé secrète K-PAY. La même fonction de hachage qu'à l'étape E20 peut être utilisée.

Le module de chiffrement 4E du dispositif TSP 4 chiffre ensuite chaque jeton de sécurité Ti généré pour le terminal mobile 2 au moyen d'un algorithme de chiffrement symétrique en utilisant la clé de chiffrement ki générée pour ce jeton (étape F70). Dans le mode de réalisation décrit ici, ce chiffrement est réalisé en appliquant l'algorithme de chiffrement symétrique sur le paquet de données EMVi signé contenant le jeton Ti. Il en résulte un jeton de sécurité chiffré noté TOKi. Aucune limitation n'est attachée à l'algorithme de chiffrement symétrique utilisé pour générer le jeton de sécurité chiffré TOKi. Le module de chiffrement 4D utilise par exemple ici un algorithme de chiffrement AES (Advanced Encryption Standard), connu en soi.

Dans le mode de réalisation décrit ici, après la génération et le chiffrement des N jetons de sécurité requis par le terminal mobile 2, le module de chiffrement 4E du dispositif TSP 4 signe les N jetons chiffrés TOKi et leurs aléas ai, i=1,...,N au moyen d'un algorithme de signature (par exemple le même algorithme RSA que celui utilisé pour signer les paquets EMVi) et en utilisant la clé privée de signature ssigkTSP4 du dispositif TSP 4 (étape F80). Il en résulte un ensemble de données signé noté TOKEN, comprenant les N jetons de sécurité chiffrés et leurs aléas.

En variante, les jetons de sécurité chiffrés TOKi et leurs aléas ai peuvent être signés individuellement lors de l'étape F80.

Le dispositif TSP 4 envoie ensuite, par l'intermédiaire de son module d'envoi 4F, l'ensemble de données TOKEN comprenant les N jetons de sécurité TOKi chiffrés et leurs aléas ai signés au terminal mobile 2, en réponse à la requête de génération de jetons émise précédemment par le terminal 2 (étape F90).

Sur réception de la réponse du dispositif TSP 4 par son premier module de réception 12B, l'application mobile 12 du terminal 2 vérifie la signature de l'ensemble de données TOKEN au moyen de la clé publique de (vérification de) signature psigkTSP4 correspondant à la clé privée ssigkTSP4 du dispositif TSP 4 (étape E110).

Si la signature est valide, l'application mobile 12 par l'intermédiaire de son module de stockage 12C stocke alors les N jetons de sécurité chiffrés TOKi et les aléas associés ai, i=1,...,N contenus dans l'ensemble TOKEN, dans la mémoire non volatile 8 du terminal mobile 2 (étape E120). On note que dans le mode de réalisation décrit ici, le module de stockage 12C stocke les N jetons de sécurité chiffrés et leurs aléas en dehors de l'élément sécurisé 9.

Les N jetons ainsi stockés peuvent alors être utilisés par le terminal 2 lors de transactions électroniques.

Nous allons maintenant décrire, en référence aux **figures 6** **et** **7****,** un exemple d'utilisation d'un jeton de sécurité obtenu par le terminal mobile 2 lors d'une transaction électronique. A titre illustratif, on envisage comme mentionné précédemment une transaction électronique de type achat d'un article par l'utilisateur U du terminal mobile 2 auprès du dispositif marchand 3. Cette transaction électronique comprend une opération de paiement de l'article acheté par l'utilisateur U réalisée via le terminal mobile 2 auprès du dispositif marchand 3, au moyen d'un des jetons sécurisés générés par le dispositif TSP 4.

L'opération de paiement de l'achat effectué par l'utilisateur U implique, dans le mode de réalisation décrit ici, le dispositif marchand 3, le terminal mobile 2 et le dispositif TSP 4. Ainsi, la figure 6 illustre les principales étapes mises en œuvre par le dispositif marchand 3 pour obtenir le paiement de l'article acheté par l'utilisateur 8, et les principales étapes du procédé de vérification mises en œuvre par le dispositif TSP 4 pour valider le jeton utilisé lors de ce paiement par le terminal mobile 2. La figure 7 reprend les principales étapes du procédé de traitement mises en œuvre par le terminal mobile 2, et ses différentes entités 9, 11 et 12, pour effectuer le paiement requis par le dispositif marchand 3 au moyen d'un jeton de sécurité généré par le dispositif TSP 4. Il convient de noter que conformément au standard EMV®, d'autres entités peuvent être amenées à intervenir lors du paiement (ex. organisme bancaire). Toutefois on suppose que l'intervention de ces entités est conforme aux spécifications du standard EMV® et connue en soi, et n'est donc pas décrite plus en détail ici.

En référence à la figure 6, le dispositif marchand 3 émet à destination du terminal mobile 2 une requête de paiement de l'achat effectué par l'utilisateur U (étape G10). Cette requête de paiement comprend un identifiant du marchand TR_POS et une donnée caractéristique de la transaction, à savoir ici le montant TR_AM de la transaction. Elle constitue une requête prédéterminée provenant d'un dispositif tiers et relative à une transaction économique au sens de l'invention.

La requête de paiement est reçue par l'application mobile 12 du terminal, et plus particulièrement par son module de réception 12D. Elle déclenche l'envoi d'une requête d'identification de l'utilisateur par le module de réception 12D à l'environnement d'exécution sécurisé TEE 11 (étape H10).

Sur réception de cette requête, le TEE 11, par l'intermédiaire de son module d'identification 11A, demande à l'utilisateur U de s'identifier (étape H20). Dans le mode de réalisation décrit ici, le module d'identification 11A du TEE 11 demande à l'utilisateur U de lui fournir à cet effet un code PIN, comme à l'étape E30 précédente. Toutefois, comme mentionné précédemment, d'autres modes d'identification de l'utilisateur U peuvent être considérés en variante.

On suppose que l'utilisateur U fournit le code PIN requis (étape H30). Le module d'identification 11A du TEE 11 vérifie la validité du code PIN (étape H40).

Si le code PIN fourni par l'utilisateur U n'est pas correct (éventuellement après plusieurs tentatives), le TEE 11 notifie l'application mobile 12 de l'échec de l'identification de l'utilisateur U. Le procédé de traitement de la requête de paiement s'achève alors.

Si l'identification de l'utilisateur U est réalisée avec succès, le TEE 11 déclenche la sélection par l'application mobile 12, et plus particulièrement par son module de sélection 12E, d'un jeton de sécurité TOKiO stocké sous forme chiffrée et obtenu précédemment du dispositif TSP 4 au cours de l'étape F90 (étape H50). Cette sélection peut être réalisée de manière aléatoire ou dans l'ordre de stockage des jetons dans la mémoire volatile 16.

Le jeton de sécurité chiffré TOKiO est associé à un aléa aiO, qui est transmis par le module de sélection 12E au TEE 11, de même que l'identifiant TR-POS du dispositif marchand 3 et le montant de la transaction TR-AM reçus dans la requête de paiement (étape H60).

Le TEE 11 envoie ensuite une requête à l'élément sécurisé 9 lui demandant de générer la clé de chiffrement permettant de déchiffrer le jeton de sécurité TOKiO (étape H70). Cette requête comprend l'aléa ai0 associé au jeton sélectionné, l'identifiant TR-POS et le montant TR-AM.

Sur réception de cette requête, l'élément sécurisé 9, par l'intermédiaire de son second module de génération 9B, génère la clé de chiffrement ki0 utilisée pour chiffrer le jeton de sécurité TOKiO (étape H80). A cet effet, comme le dispositif TSP 4 précédemment, il applique une fonction de hachage cryptographique à clé secrète HMAC (la même que celle utilisée par le dispositif TSP 4) sur l'aléa ai0 et la clé secrète K-PAY qu'il partage avec le dispositif TSP 4.

Dans le mode de réalisation décrit ici, le module de génération 9B génère également un élément de signature de la transaction électronique en cours d'exécution. Cet élément de signature est généré en appliquant la fonction de hachage cryptographique à clé secrète HMAC utilisée pour générer la clé de chiffrement sur l'identifiant TR-POS, le montant de la transaction TR-AM, l'aléa ai0 et la clé secrète K-PAY. On désigne par TR-SIG le condensé ainsi obtenu et qui constitue l'élément de signature de la transaction électronique.

Puis l'élément sécurisé 9 envoie la clé de chiffrement ki0 ainsi générée et l'élément de signature TR-SIG à l'application mobile 12 (étape H90).

Sur réception de la clé de chiffrement ki0, l'application mobile 12, par le biais de son module de déchiffrement 12F, déchiffre le jeton de sécurité TOKiO en utilisant la clé de chiffrement ki0 (étape H100). Elle utilise à cet effet l'algorithme de déchiffrement correspondant à l'algorithme de chiffrement symétrique utilisé par le dispositif TSP 4 au cours de l'étape F70 pour chiffrer le jeton. Dans l'exemple envisagé ici, il s'agit d'un algorithme AES. Le module de déchiffrement 12F obtient à l'issue de cette étape de déchiffrement le paquet de données EMViO signé par le dispositif TSP 4 et comprenant le jeton de sécurité Ti0 sous forme déchiffrée.

On note que conformément à l'invention, le déchiffrement du jeton de sécurité n'est pas nécessairement mis en œuvre par l'élément sécurisé, mais peut être mis en œuvre directement par l'application mobile 12.

L'application mobile 12 émet ensuite, par l'intermédiaire de son second module d'envoi 12G, une réponse à la requête de paiement du dispositif marchand 3 (étape H110). Cette requête comprend le paquet de données signé EMViO contenant le jeton de sécurité Ti0 du terminal mobile 2, accompagné d'un certificat CERT-TSP4 de la clé publique de signature du dispositif TSP 4 délivré à celui-ci par une autorité de confiance (comme le prévoit par exemple le protocole EMV-SDA) et de l'élément de signature TR-SIG. On suppose que le certificat CERT-TSP4 a été obtenu par le terminal mobile 2 lors de la phase préliminaire d'inscription auprès du dispositif TSP 4.

En référence à la figure 6 de nouveau, sur réception de la réponse du terminal mobile 2, le dispositif marchand 3 vérifie le certificat ainsi que la signature du paquet de données signé EMVi, en utilisant la clé de (vérification de) signature publique psigkTSP4 du dispositif TSP 4 (étape G20). Il extrait du paquet de données EMVi l'identifiant du terminal 2 TR-ID, le jeton de sécurité Ti0 et les données transactionnelles DATA propres à l'utilisateur U.

Puis le dispositif marchand 3 envoie une requête de détokenisation au dispositif TSP 4 visant à vérifier la validité du jeton Ti0 fourni par le terminal mobile 2. Cette requête comprenant l'identifiant du terminal 2 TR-ID, le jeton de sécurité TiO, les données transactionnelles DATA précédemment extraits du paquet EMVi et l'élément de signature de la transaction TR-SIG (étape G30). Il inclut par ailleurs dans cette requête son identifiant TR-POS ainsi que le montant de la transaction TR-AM.

Le dispositif TSP 4, sur réception de la requête de détokenisation du dispositif marchand 3 par son module de réception 4G, vérifie par le biais de son module de vérification 4H que le jeton de sécurité Ti0 correspond bien à un jeton de sécurité qu'il a généré pour le terminal mobile 2, autrement dit, associé dans sa mémoire à l'identifiant TR-ID (étape I10).

Le cas échéant, il vérifie également la validité de l'élément de signature TR-SIG. A cet effet, il génère à partir de la fonction cryptographique à clé secrète HMAC un condensé en appliquant cette fonction sur l'identifiant TR-POS, le montant TR-AM, l'aléa ai0 associé au jeton Ti0 dans sa mémoire non volatile et la clé secrète K-PAY qu'il partage avec l'élément sécurisé 9. Il compare le condensé obtenu à l'élément de signature TR-SIG. Si les deux sont égaux, l'élément de signature TR-SIG est reconnu comme valide.

Si le module de vérification 4H du dispositif TSP 4 détermine que le jeton de sécurité Ti0 a bien été généré par lui pour le terminal mobile 2 et que l'élément de signature TR-SIG est valide, il confirme au dispositif marchand 3 la validité du jeton utilisé par le terminal mobile 2 pour le paiement de la transaction (étape I20). Sinon, il notifie au dispositif marchand 3 que le jeton utilisé par le terminal mobile 2 n'est pas valide.

Le dispositif TSP 4 peut par ailleurs, conformément aux spécifications du protocole EMV®, mener d'autres opérations notamment auprès de l'organisme bancaire de l'utilisateur U permettant de procéder au paiement de l'achat réalisé par l'utilisateur U à partir par exemple du numéro de carte PAN correspondant au jeton validé. Ces opérations étant connues en soi et similaires à celles mises en œuvre pour un paiement par carte bancaire classique auprès d'un terminal de paiement, elles ne sont pas décrites en détail ici. Elles sont détaillées dans le livre 2 des spécifications pour les systèmes de paiement du protocole EMV® intitulé « Security and Key Management ».

Sur réception de la confirmation du dispositif TSP 4, le dispositif marchand 3 supprime le jeton de sécurité Ti0 (étape G40). Il envoie par ailleurs une confirmation de l'acception du paiement au terminal mobile 2 (étape G50).

Sur réception de cette confirmation, le terminal mobile 2 met hors service le jeton de sécurité Ti0 et son aléa associé (étape H120). Dans le mode de réalisation décrit ici, cette mise hors service consiste à supprimer le jeton de sécurité Ti0 et son aléa ai0 dans la mémoire non volatile du terminal mobile 2, autrement dit, à supprimer le paquet EMViO.

La transaction électronique comprenant le paiement de l'achat réalisé par l'utilisateur U s'achève alors.

## Revendications

1. Procédé d'obtention, par un terminal mobile (2) d'un utilisateur, d'au moins un jeton de sécurité destiné à être utilisé lors d'une transaction électronique, ce procédé comprenant :
- une étape (E30-E50) d'identification de l'utilisateur du terminal mobile ;
- une étape, déclenchée si l'identification de l'utilisateur est réalisée avec succès, de génération (E70) par un élément sécurisé (9) du terminal mobile d'au moins une valeur d'identification du terminal mobile en utilisant une première clé secrète partagée entre l'élément sécurisé et un dispositif fournisseur de jetons ;
- une étape d'envoi (E100), au dispositif fournisseur de jetons, d'une requête d'obtention d'au moins un jeton de sécurité destiné à être utilisé par le terminal mobile lors d'une transaction électronique, cette requête comprenant ladite au moins une valeur d'identification du terminal mobile ; et
- une étape de réception (F90), en provenance du dispositif fournisseur de jetons, dudit au moins un jeton de sécurité sous forme chiffrée, chaque jeton de sécurité étant associé à un aléa généré par le dispositif fournisseur de jetons et chiffré au moyen d'une clé de chiffrement générée pour ce jeton de sécurité à partir de l'aléa et d'une deuxième clé secrète partagée entre le dispositif fournisseur de jetons et l'élément sécurisé du terminal mobile.

2. Procédé d'obtention selon la revendication 1 dans lequel ladite au moins une valeur d'identification générée par l'élément sécurisé comprend :
- un compteur (CCH) maintenu par l'élément sécurisé, correspondant au nombre de requêtes d'obtention d'au moins un jeton envoyées par le terminal au dispositif fournisseur de jetons ; et
- un condensé (H-ID) généré en appliquant une fonction de hachage au compteur et à la première clé secrète.

3. Procédé d'obtention selon la revendication 1 ou 2 dans lequel ledit au moins un jeton de sécurité chiffré et l'aléa associé sont stockés sur le terminal mobile en dehors de l'élément sécurisé.

4. Procédé de traitement d'une requête relative à une transaction électronique par un terminal mobile d'un utilisateur comprenant un élément sécurisé, le procédé de traitement comprenant :
- une étape (H20-H30), déclenchée sur réception (G10) d'une requête prédéterminée provenant d'un dispositif tiers et relative à une transaction électronique, d'identification de l'utilisateur du terminal mobile ;
- une étape, déclenchée si l'identification de l'utilisateur est réalisée avec succès, de sélection (H50) d'un jeton de sécurité parmi au moins un jeton de sécurité chiffré stocké sur le terminal mobile et obtenu d'un dispositif fournisseur de jetons conformément à un procédé d'obtention selon l'une quelconque des revendications 1 à 3, le jeton sélectionné étant associé à un aléa ;
- une étape de génération (H80) par l'élément sécurisé du terminal mobile, pour le jeton sélectionné, d'une clé de chiffrement à partir de l'aléa associé au jeton et de la deuxième clé secrète partagée entre le dispositif fournisseur de jetons et l'élément sécurisé et utilisée lors du procédé d'obtention ;
- une étape de déchiffrement (H100) du jeton sélectionné au moyen de la clé de chiffrement générée ; et
- une étape d'envoi (H110) d'une réponse à la requête du dispositif tiers comprenant le jeton déchiffré.

5. Procédé de traitement selon la revendication 4 dans lequel, lors de l'étape de génération (H80), l'élément sécurisé du terminal mobile génère en outre un élément de signature de la transaction électronique à partir d'un identifiant du dispositif tiers, d'une donnée caractéristique de la transaction fournie par le dispositif tiers, de l'aléa associé au jeton de sécurité et de la deuxième clé secrète, cet élément de signature de la transaction étant transmis au dispositif tiers dans la réponse à la requête.

6. Procédé de génération, par un dispositif fournisseur de jetons (4), d'au moins un jeton destiné à être utilisé par un terminal mobile lors d'une transaction électronique, ledit procédé de génération comprenant :
- une étape de réception (E100), en provenance du terminal mobile, d'une requête d'obtention d'au moins un jeton de sécurité destiné à être utilisé par le terminal mobile lors d'une transaction électronique, cette requête comprenant au moins une valeur d'identification du terminal mobile générée par un élément sécurisé du terminal mobile en utilisant une première clé secrète partagée entre l'élément sécurisé et le dispositif fournisseur de jetons ;
- une étape de vérification (F10) de ladite au moins une valeur d'identification au moyen de la première clé secrète ;
- une étape (F30), déclenchée si ladite au moins une valeur d'identification est valide, de génération pour ledit terminal mobile dudit au moins un jeton de sécurité et d'un aléa associé à chaque jeton ;
- une étape de génération (F60) d'une clé de chiffrement pour chaque jeton de sécurité à partir de l'aléa associé à ce jeton et d'une deuxième clé secrète partagée entre le dispositif fournisseur de jetons et l'élément sécurisé du terminal mobile ;
- une étape de chiffrement (F70) de chaque jeton de sécurité en utilisant la clé de chiffrement générée pour ce jeton ; et
- une étape d'envoi (F90) au terminal mobile dudit au moins un jeton de sécurité chiffré et de l'aléa associé.

7. Procédé de vérification d'un jeton de sécurité fourni par un terminal mobile d'un utilisateur à un dispositif tiers lors d'une transaction électronique, ce procédé de validation étant destiné à être mis en œuvre par un dispositif fournisseur de jetons ayant généré le jeton pour le terminal mobile conformément à un procédé de génération selon la revendication 6, le procédé de vérification comprenant :
- une étape de réception (G30), en provenance du dispositif tiers, d'une requête de vérification comprenant le jeton ; et
- une étape de vérification (I10) que le jeton compris dans la requête a bien été généré par le dispositif fournisseur de jetons pour le terminal mobile.

8. Procédé de vérification selon la revendication 7 comprenant en outre une étape de validation (I10) d'un élément de signature de la transaction compris dans la requête, cet élément de signature ayant été généré à partir d'un identifiant du dispositif tiers, d'une donnée caractéristique de la transaction, de l'aléa associé au jeton de sécurité et de la deuxième clé secrète utilisée lors du procédé de génération et partagée entre l'élément sécurisé du terminal mobile et le dispositif de fournisseur de jetons.

9. Terminal mobile (2) comprenant :
- un élément sécurisé (9) ;
- un module d'identification (11A) configuré pour identifier un utilisateur du terminal mobile ;
- un module de génération (9A), compris dans l'élément sécurisé et activé si l'identification de l'utilisateur par le module d'identification est réalisée avec succès, ce module de génération étant configuré pour générer au moins une valeur d'identification du terminal mobile en utilisant une première clé secrète partagée entre l'élément sécurisé et un dispositif fournisseur de jetons ;
- un module d'envoi (12A), configuré pour envoyer au dispositif fournisseur de jetons une requête d'obtention d'au moins un jeton de sécurité destiné à être utilisé par le terminal mobile lors d'une transaction électronique, cette requête comprenant ladite au moins une valeur d'identification du terminal mobile ; et
- un module de réception (12B), apte à recevoir en provenance du dispositif fournisseur de jetons, ledit au moins un jeton de sécurité sous forme chiffrée, chaque jeton de sécurité étant associé à un aléa généré par le dispositif fournisseur de jetons et chiffré au moyen d'une clé de chiffrement générée pour ce jeton à partir de l'aléa et d'une deuxième clé secrète partagée entre le dispositif fournisseur de jetons et l'élément sécurisé du terminal mobile.

10. Terminal mobile selon la revendication 9 dans lequel le module d'identification est activé en outre sur réception d'une requête prédéterminée provenant d'un dispositif tiers et relative à une transaction électronique, ledit terminal mobile comprenant :
- un module de sélection (12E), activé si l'identification de l'utilisateur par le module d'identification est réalisée avec succès, et configuré pour sélectionner un jeton de sécurité parmi ledit au moins un jeton de sécurité chiffré stocké sur le terminal mobile par le module de stockage ;
- un module de génération (9B), compris dans l'élément sécurisé du terminal mobile, et configuré pour générer pour le jeton de sécurité sélectionné, une clé de chiffrement à partir de l'aléa associé au jeton et de la deuxième clé secrète partagée entre le dispositif fournisseur de jetons et l'élément sécurisé ;
- un module de déchiffrement (12F) configuré pour déchiffrer le jeton de sécurité sélectionné au moyen de la clé de chiffrement générée ; et
- un module d'envoi (12G) configuré pour envoyer une réponse à la requête du dispositif tiers comprenant le jeton de sécurité déchiffré.

11. Dispositif fournisseur de jetons de sécurité (4) destinés à être utilisés lors de transactions électroniques, comprenant :
- un premier module de réception (4A), apte à recevoir en provenance d'un terminal mobile, une requête d'obtention d'au moins un jeton de sécurité destiné à être utilisé par le terminal mobile lors d'une transaction électronique, cette requête comprenant au moins une valeur d'identification du terminal mobile générée par un élément sécurisé du terminal mobile en utilisant une première clé secrète partagée entre l'élément sécurisé et le dispositif fournisseur de jetons ;
- un premier module de vérification (4B) configuré pour vérifier ladite au moins une valeur d'identification au moyen de la première clé secrète ;
- un premier module de génération (4C), activé si ladite au moins une valeur d'identification vérifiée par le module de vérification est valide, et configuré pour générer pour le terminal mobile au moins un jeton de sécurité et un aléa associé à chaque jeton ;
- un second module de génération (4D), configuré pour générer une clé de chiffrement pour chaque jeton de sécurité généré par le premier module de génération, à partir de l'aléa associé à ce jeton et d'une deuxième clé secrète partagée entre le dispositif fournisseur de jetons et l'élément sécurisé du terminal mobile ;
- un module de chiffrement (4E), configuré pour chiffrer chaque jeton de sécurité en utilisant la clé de chiffrement générée pour ce jeton ; et
- un module d'envoi (4F), configuré pour envoyer au terminal mobile ledit au moins un jeton de sécurité chiffré et l'aléa associé.

12. Système (1) comprenant :
- un dispositif (4) fournisseur de jetons de sécurité selon la revendication 11 ;
- un terminal mobile (2) selon la revendication 10 ; et
- un dispositif tiers (3) apte à réaliser une transaction électronique avec le terminal mobile ;
le terminal mobile étant configuré pour utiliser lors de ladite transaction électronique avec le dispositif tiers un jeton de sécurité généré par le dispositif fournisseur de jetons.

## Patentansprüche

1. Verfahren zum Erlangen, durch ein mobiles Endgerät (2) eines Benutzers, mindestens eines Sicherheitstokens, das dazu bestimmt ist, bei einer elektronischen Transaktion verwendet zu werden, wobei dieses Verfahren enthält:
- einen Schritt (E30-E50) der Identifizierung des Benutzers des mobilen Endgeräts;
- einen Schritt, der ausgelöst wird, wenn die Identifizierung des Benutzers erfolgreich durchgeführt wird, der Generierung (E70) durch ein gesichertes Element (9) des mobilen Endgeräts mindestens eines Identifizierungswerts des mobilen Endgeräts unter Verwendung eines vom gesicherten Element und von einer Tokenbereitstellungsvorrichtung gemeinsam genutzten ersten Geheimschlüssels;
- einen Schritt des Sendens (E100), an die Tokenbereitstellungsvorrichtung, einer Anforderung zum Erlangen mindestens eines Sicherheitstokens, das dazu bestimmt ist, vom mobilen Endgerät bei einer elektronischen Transaktion verwendet zu werden, wobei diese Anforderung den mindestens einen Identifizierungswert des mobilen Endgeräts enthält; und
- einen Schritt des Empfangs (F90), von der Tokenbereitstellungsvorrichtung, des mindestens einen Sicherheitstokens in verschlüsselter Form, wobei jedes Sicherheitstoken einer von der Tokenbereitstellungsvorrichtung generierten Zufallszahl zugeordnet ist und mittels eines Verschlüsselungsschlüssels verschlüsselt wird, der für dieses Sicherheitstoken ausgehend von der Zufallszahl und von einem von der Tokenbereitstellungsvorrichtung und vom gesicherten Element des mobilen Endgeräts gemeinsam genutzten zweiten Geheimschlüssel generiert wird.

2. Erlangungsverfahren nach Anspruch 1, wobei der vom gesicherten Element generierte mindestens eine Identifizierungswert enthält:
- einen Zähler (CCH), aufrechterhalten vom gesicherten Element, der der Anzahl von Erlangungsanforderungen mindestens eines Tokens entspricht, die vom Endgerät an die Tokenbereitstellungsvorrichtung geschickt wurden; und
- ein Kondensat (H-ID), das generiert wird, indem eine Hashfunktion an den Zähler und den ersten Geheimschlüssel angewendet wird.

3. Erlangungsverfahren nach Anspruch 1 oder 2, wobei das mindestens eine verschlüsselte Sicherheitstoken und die zugeordnete Zufallszahl auf dem mobilen Endgerät außerhalb des gesicherten Elements gespeichert werden.

4. Verfahren zur Verarbeitung einer Anforderung bezüglich einer elektronischen Transaktion durch ein mobiles Endgerät eines Benutzers, das ein gesichertes Element enthält, wobei das Verarbeitungsverfahren enthält:
- einen Schritt (H20-H30) der Identifizierung des Benutzers des mobilen Endgeräts, der beim Empfang (G10) einer vorbestimmten Anforderung ausgelöst wird, die von einer Drittvorrichtung kommt und sich auf eine elektronischen Transaktion bezieht;
- einen Schritt, der ausgelöst wird, wenn die Identifizierung des Benutzers erfolgreich durchgeführt wird, der Auswahl (H50) eines Sicherheitstokens unter mindestens einem verschlüsselten Sicherheitstoken, das auf dem mobilen Endgerät gespeichert ist und von einer Tokenbereitstellungsvorrichtung gemäß einem Erlangungsverfahren nach einem der Ansprüche 1 bis 3 erhalten wird, wobei das ausgewählte Token einer Zufallszahl zugeordnet ist;
- einen Schritt der Generierung (H80), durch das gesicherte Element des mobilen Endgeräts für das ausgewählte Token, eines Verschlüsselungsschlüssels ausgehend von der dem Token zugeordneten Zufallszahl und vom zweiten Geheimschlüssel, der von der Tokenbereitstellungsvorrichtung und vom gesicherten Element gemeinsam genutzt und beim Erlangungsverfahren verwendet wird;
- einen Schritt der Entschlüsselung (H100) des ausgewählten Tokens mittels des generierten Verschlüsselungsschlüssels; und
- einen Schritt des Sendens (H110) einer Antwort auf die Anforderung der Drittvorrichtung, die das entschlüsselte Token enthält.

5. Verarbeitungsverfahren nach Anspruch 4, wobei das gesicherte Element des mobilen Endgeräts während des Generierungsschritts (H80) außerdem ein Signaturelement der elektronischen Transaktion ausgehend von einer Kennung der Drittvorrichtung, einem von der Drittvorrichtung gelieferten charakteristischen Datenwert der Transaktion, der dem Sicherheitstoken zugeordneten Zufallszahl und dem zweiten Geheimschlüssel generiert, wobei dieses Signaturelement der Transaktion in der Antwort auf die Anforderung an die Drittvorrichtung übertragen wird.

6. Verfahren zur Generierung, durch eine Tokenbereitstellungsvorrichtung (4), mindestens eines Tokens, das dazu bestimmt ist, von einem mobilen Endgerät bei einer elektronischen Transaktion verwendet zu werden, wobei das Generierungsverfahren enthält:
- einen Schritt des Empfangs (E100), vom mobilen Endgerät, einer Anforderung zur Erlangung mindestens eines Sicherheitstokens, das dazu bestimmt ist, vom mobilen Endgerät bei einer elektronischen Transaktion verwendet zu werden, wobei diese Anforderung mindestens einen Identifizierungswert des mobilen Endgeräts enthält, der von einem gesicherten Element des mobilen Endgeräts unter Verwendung eines vom gesicherten Element und von der Tokenbereitstellungsvorrichtung gemeinsam genutzten ersten Geheimschlüssels generiert wird;
- einen Schritt der Überprüfung (F10) des mindestens einen Identifizierungswerts mittels des ersten Geheimschlüssels;
- einen Schritt (F30), der ausgelöst wird, wenn der mindestens eine Identifizierungswert gültig ist, der Generierung für das mobile Endgerät des mindestens einen Sicherheitstokens und einer jedem Token zugeordneten Zufallszahl;
- einen Schritt der Generierung (F60) eines Verschlüsselungsschlüssels für jedes Sicherheitstoken ausgehend von der diesem Token zugeordneten Zufallszahl und von einem von der Tokenbereitstellungsvorrichtung und vom gesicherten Element des mobilen Endgeräts gemeinsam genutzten zweiten Geheimschlüssel;
- einen Schritt der Verschlüsselung (F70) jedes Sicherheitstokens unter Verwendung des für dieses Token generierten Verschlüsselungsschlüssels; und
- einen Schritt des Sendens (F90) des mindestens einen verschlüsselten Sicherheitstokens und der zugeordneten Zufallszahl an das mobile Endgerät.

7. Verfahren zur Überprüfung eines Sicherheitstokens, das während einer elektronischen Transaktion einer Drittvorrichtung von einem mobilen Endgerät eines Benutzers bereitgestellt wird, wobei dieses Validierungsverfahren dazu bestimmt ist, von einer Tokenbereitstellungsvorrichtung durchgeführt zu werden, die das Token für das mobile Endgerät gemäß einem Generierungsverfahren nach Anspruch 6 generiert hat, wobei das Überprüfungsverfahren enthält:
- einen Schritt des Empfangs (G30), von der Drittvorrichtung, einer das Token enthaltenden Überprüfungsanforderung; und
- einen Schritt der Überprüfung (I10), ob das in der Anforderung enthaltende Token tatsächlich von der Tokenbereitstellungsvorrichtung für das mobile Endgerät generiert wurde.

8. Überprüfungsverfahren nach Anspruch 7, das außerdem einen Schritt der Validierung (I10) eines in der Anforderung enthaltenen Signaturelements der Transaktion enthält, wobei dieses Signaturelement ausgehend von einer Kennung der Drittvorrichtung, einem charakteristischen Datenwert der Transaktion, der dem Sicherheitstoken zugeordneten Zufallszahl und dem zweiten Geheimschlüssel generiert wurde, der im Generierungsverfahren verwendet und vom gesicherten Element des mobilen Endgeräts und von der Tokenbereitstellungsvorrichtung gemeinsam genutzt wird.

9. Mobiles Endgerät (2), das enthält:
- ein gesichertes Element (9);
- ein Identifizierungsmodul (11A), das konfiguriert ist, einen Benutzer des mobilen Endgeräts zu identifizieren;
- ein Generierungsmodul (9A), das im gesicherten Element enthalten ist und aktiviert wird, wenn die Identifizierung des Benutzers durch das Identifizierungsmodul erfolgreich durchgeführt wird, wobei dieses Generierungsmodul konfiguriert ist, mindestens einen Identifizierungswert des mobilen Endgeräts unter Verwendung eines vom gesicherten Element und von einer Tokenbereitstellungsvorrichtung gemeinsam genutzten ersten Geheimschlüssels zu generieren;
- ein Sendemodul (12A), das konfiguriert ist, an die Tokenbereitstellungsvorrichtung eine Erlangungsanforderung mindestens eines Sicherheitstokens zu senden, das dazu bestimmt ist, vom mobilen Endgerät bei einer elektronischen Transaktion verwendet zu werden, wobei diese Anforderung den mindestens einen Identifizierungswert des mobilen Endgeräts enthält; und
- ein Empfangsmodul (12B), das von der Tokenbereitstellungsvorrichtung das mindestens eine Sicherheitstoken in verschlüsselter Form empfangen kann, wobei jedes Sicherheitstoken einer von der Tokenbereitstellungsvorrichtung generierten Zufallszahl zugeordnet ist und mittels eines für dieses Token generierten Verschlüsselungsschlüssels ausgehend von der Zufallszahl und von einem von der Tokenbereitstellungsvorrichtung und vom gesicherten Element des mobilen Endgeräts gemeinsam genutzten zweiten Geheimschlüssel verschlüsselt wird.

10. Mobiles Endgerät nach Anspruch 9, wobei das Identifizierungsmodul außerdem bei Empfang einer vorbestimmten Anforderung aktiviert wird, die von einer Drittvorrichtung kommt und sich auf eine elektronische Transaktion bezieht, wobei das mobile Endgerät enthält:
- ein Auswahlmodul (12E), das aktiviert wird, wenn die Identifizierung des Benutzers durch das Identifizierungsmodul erfolgreich durchgeführt wird, und konfiguriert ist, ein Sicherheitstoken unter dem mindestens einen verschlüsselten Sicherheitstoken auszuwählen, das auf dem mobilen Endgerät vom Speichermodul gespeichert wird;
- ein Generierungsmodul (9B), das im gesicherten Element des mobilen Endgeräts enthalten und konfiguriert ist, für das ausgewählte Sicherheitstoken einen Verschlüsselungsschlüssel ausgehend von der dem Token zugeordneten Zufallszahl und vom von der Tokenbereitstellungsvorrichtung und vom gesicherten Element gemeinsam genutzten zweiten Geheimschlüssel zu generieren;
- ein Entschlüsselungsmodul (12F), das konfiguriert ist, das ausgewählte Sicherheitstoken mittels des generierten Verschlüsselungsschlüssels zu entschlüsseln; und
- ein Sendemodul (12G), das konfiguriert ist, eine Antwort auf die Anforderung der Drittvorrichtung zu senden, die das entschlüsselte Sicherheitstoken enthält.

11. Sicherheitstoken-Bereitstellungsvorrichtung (4), die dazu bestimmt ist, bei elektronischen Transaktionen verwendet zu werden, die enthält:
- ein erstes Empfangsmodul (4A), das von einem mobilen Endgerät eine Erlangungsanforderung mindestens eines Sicherheitstokens empfängt, das dazu bestimmt ist, vom mobilen Endgerät bei einer elektronischen Transaktion verwendet zu werden, wobei diese Anforderung mindestens einen Identifizierungswert des mobilen Endgeräts enthält, der von einem gesicherten Element des mobilen Endgeräts unter Verwendung eines vom gesicherten Element und von der Tokenbereitstellungsvorrichtung gemeinsam genutzten ersten Geheimschlüssels generiert wird;
- ein erstes Überprüfungsmodul (4B), das konfiguriert ist, den mindestens einen Identifizierungswert mittels des ersten Geheimschlüssels zu überprüfen;
- ein erstes Generierungsmodul (4C), das aktiviert wird, wenn der vom Überprüfungsmodul überprüfte mindestens eine Identifizierungswert gültig ist, und konfiguriert ist, für das mobile Endgerät mindestens ein Sicherheitstoken und eine jedem Token zugeordnete Zufallszahl zu generieren;
- ein zweites Generierungsmodul (4D), das konfiguriert ist, für jedes vom ersten Generierungsmodul generierte Sicherheitstoken einen Verschlüsselungsschlüssel ausgehend von der diesem Token zugeordneten Zufallszahl und von einem von der Tokenbereitstellungsvorrichtung und vom gesicherten Element des mobilen Endgeräts gemeinsam genutzten zweiten Geheimschlüssel zu generieren;
- ein Verschlüsselungsmodul (4E), das konfiguriert ist, jedes Sicherheitstoken unter Verwendung des für dieses Token generierten Verschlüsselungsschlüssels zu verschlüsseln; und
- ein Sendemodul (4F), das konfiguriert ist, an das mobile Endgerät das mindestens eine verschlüsselte Sicherheitstoken und die zugeordnete Zufallszahl zu senden.

12. System (1), das enthält:
- eine Sicherheitstoken-Bereitstellungsvorrichtung (4) nach Anspruch 11;
- ein mobiles Endgerät (2) nach Anspruch 10; und
- eine Drittvorrichtung (3), die eine elektronische Transaktion mit dem mobilen Endgerät durchführen kann;
wobei das mobile Endgerät konfiguriert ist, bei der elektronischen Transaktion mit der Drittvorrichtung ein von der Tokenbereitstellungsvorrichtung generiertes Sicherheitstoken zu verwenden.

## Claims

1. Method for obtaining, by means of a mobile terminal (2) of a user, at least one security token intended to be used for an electronic transaction, this method comprising:
- a step (E30-E50) of identifying the user of the mobile terminal;
- a step, initiated if the user is identified successfully, of generating (E70), by means of a secure element (9) of the mobile terminal, at least one identification value of the mobile terminal by using a first secret key shared between the secure element and a token-provisioning device;
- a step of sending (E100), to the token-provisioning device, a request to obtain at least one security token intended to be used by the mobile terminal for an electronic transaction, this request comprising said at least one identification value of the mobile terminal; and
- a step of receiving (F90), from the token-provisioning device, said at least one security token in encrypted form, each security token being associated with a random number generated by the token-provisioning device and encrypted by means of an encryption key generated for this security token from the random number and a second secret key shared between the token-provisioning device and the secure element of the mobile terminal.

2. Obtaining method according to Claim 1, in which said at least one identification value generated by the secure element comprises:
- a counter (CCH) kept by the secure element, corresponding to the number of requests to obtain at least one token that are sent by the terminal to the token-provisioning device; and
- a digest (H-ID) generated by applying a hash function to the counter and to the first secret key.

3. Obtaining method according to Claim 1 or 2, in which said at least one encrypted security token and the associated random number are stored on the mobile terminal outside the secure element.

4. Method for processing a request relating to an electronic transaction by means of a mobile terminal of a user comprising a secure element, the processing method comprising:
- a step (H20-H30), initiated on reception (G10) of a predetermined request from a third-party device relating to an electronic transaction, of identifying the user of the mobile terminal;
- a step, initiated if the user is identified successfully, of selecting (H50) a security token from among at least one encrypted security token stored on the mobile terminal and obtained from a token-provisioning device in accordance with an obtaining method according to any one of Claims 1 to 3, the selected token being associated with a random number;
- a step of generating (H80), by means of the secure element of the mobile terminal, for the selected token, an encryption key from the random number associated with the token and from the second secret key shared between the token-provisioning device and the secure element and used for the obtaining method;
- a step of decrypting (H100) the selected token by means of the generated encryption key; and
- a step of sending (H110) a response to the request from the third-party device comprising the decrypted token.

5. Processing method according to Claim 4, in which, during the generating step (H80), the secure element of the mobile terminal furthermore generates a signature element of the electronic transaction from an identifier of the third-party device, a datum characteristic of the transaction provided by the third-party device, the random number associated with the security token and the second secret key, this signature element of the transaction being transmitted to the third-party device in the response to the request.

6. Method for generating, by means of a token-provisioning device (4), at least one token intended to be used by a mobile terminal for an electronic transaction, said generating method comprising:
- a step of receiving (E100), from the mobile terminal, a request to obtain at least one security token intended to be used by the mobile terminal for an electronic transaction, this request comprising at least one identification value of the mobile terminal that is generated by a secure element of the mobile terminal by using a first secret key shared between the secure element and the token-provisioning device;
- a step of verifying (F10) said at least one identification value by means of the first secret key;
- a step (F30), initiated if said at least one identification value is valid, of generating for said mobile terminal said at least one security token and a random number associated with each token;
- a step of generating (F60) an encryption key for each security token from the random number associated with this token and from a second secret key shared between the token-provisioning device and the secure element of the mobile terminal;
- a step of encrypting (F70) each security token by using the encryption key generated for this token; and
- a step of sending (F90) to the mobile terminal said at least one encrypted security token and the associated random number.

7. Method for verifying a security token provisioned by a mobile terminal of a user to a third-party device for an electronic transaction, this validation method being intended to be implemented by a token-provisioning device that has generated the token for the mobile terminal in accordance with a generating method according to Claim 6, the verification method comprising:
- a step of receiving (G30), from the third-party device, a verification request comprising the token; and
- a step of verifying (I10) that the token comprised in the request has indeed been generated by the token-provisioning device for the mobile terminal.

8. Verification method according to Claim 7, furthermore comprising a step of validating (I10) a signature element of the transaction that is comprised in the request, this signature element having been generated from an identifier of the third-party device, a datum characteristic of the transaction, the random number associated with the security token and the second secret key used for the generating method and shared between the secure element of the mobile terminal and the token-provisioning device.

9. Mobile terminal (2) comprising:
- a secure element (9);
- an identification module (11A) configured to identify a user of the mobile terminal;
- a generating module (9A), comprised in the secure element and activated if the user is identified by the identification module successfully, this generating module being configured to generate at least one identification value of the mobile terminal by using a first secret key shared between the secure element and a token-provisioning device;
- a sending module (12A), configured to send to the token-provisioning device a request to obtain at least one security token intended to be used by the mobile terminal for an electronic transaction, this request comprising said at least one identification value of the mobile terminal; and
- a receiving module (12B), capable of receiving from the token-provisioning device said at least one security token in encrypted form, each security token being associated with a random number generated by the token-provisioning device and encrypted by means of an encryption key generated for this token from the random number and a second secret key shared between the token-provisioning device and the secure element of the mobile terminal.

10. Mobile terminal according to Claim 9, in which the identification module is furthermore activated on reception of a predetermined request from a third-party device relating to an electronic transaction, said mobile terminal comprising:
- a selection module (12E), activated if the user is identified by the identification module successfully, and configured to select a security token from among said at least one encrypted security token stored on the mobile terminal by the storage module;
- a generating module (9B), comprised in the secure element of the mobile terminal, and configured to generate for the selected security token an encryption key from the random number associated with the token and from the second secret key shared between the token-provisioning device and the secure element;
- a decryption module (12F) configured to decrypt the selected security token by means of the generated encryption key; and
- a sending module (12G) configured to send a response to the request from the third-party device comprising the decrypted security token.

11. Device (4) provisioning security tokens intended to be used for electronic transactions, comprising:
- a first receiving module (4A), capable of receiving from a mobile terminal a request to obtain at least one security token intended to be used by the mobile terminal for an electronic transaction, this request comprising at least one identification value of the mobile terminal that is generated by a secure element of the mobile terminal by using a first secret key shared between the secure element and the token-provisioning device;
- a first verification module (4B) configured to verify said at least one identification value by means of the first secret key;
- a first generating module (4C), activated if said at least one identification value verified by the verification module is valid, and configured to generate for the mobile terminal at least one security token and a random number associated with each token;
- a second generating module (4D), configured to generate an encryption key for each security token generated by the first generating module, from the random number associated with this token and from a second secret key shared between the token-provisioning device and the secure element of the mobile terminal;
- an encryption module (4E), configured to encrypt each security token by using the encryption key generated for this token; and
- a sending module (4F), configured to send to the mobile terminal said at least one encrypted security token and the associated random number.

12. System (1) comprising:
- a device (4) provisioning security tokens according to Claim 11;
- a mobile terminal (2) according to Claim 10; and
- a third-party device (3) capable of performing an electronic transaction with the mobile terminal;
the mobile terminal being configured to use a security token generated by the token-provisioning device for said electronic transaction with the third-party device.
